# EUROPEAN PATENT SPECIFICATION

(11) **EP 4 024 835 B1**
(45) Date of publication and mention of the grant of the patent: **26.03.2025**
(21) Application number: 20863004.6
(22) Date of filing: 11.09.2020
(51) Int. Cl.: H04M 1/18, H05K 5/02, H04M 1/02

(54) **MIDDLE FRAME, REAR COVER AND PREPARATION METHOD THEREFOR, AND ELECTRONIC DEVICE**
MITTELRAHMEN, HINTERE ABDECKUNG UND HERSTELLUNGSVERFAHREN DAFÜR UND ELEKTRONISCHE VORRICHTUNG
CADRE INTERMÉDIAIRE, COUVERCLE ARRIÈRE ET SON PROCÉDÉ DE PRÉPARATION, ET DISPOSITIF ÉLECTRONIQUE

(30) Priority: 12.09.2019 CN 201910867223
(43) Date of publication of application: 06.07.2022
(73) Proprietor: Huawei Technologies Co., Ltd., Longgang District Shenzhen, Guangdong 518129 (CN)
(72) Inventor: WU, Guoping, Shenzhen, Guangdong 518129 (CN); MA, Liang, Shenzhen, Guangdong 518129 (CN); WANG, Siwei, Shenzhen, Guangdong 518129 (CN); ZHU, Guangxiang, Shenzhen, Guangdong 518129 (CN); GAO, Chengjie, Shenzhen, Guangdong 518129 (CN); YANG, Yuchan, Shenzhen, Guangdong 518129 (CN); WANG, Huan, Shenzhen, Guangdong 518129 (CN)
(74) Representative: Gill Jennings & Every LLP
(86) International application number: PCT/CN2020/114908
(87) International publication number: WO 2021/047659

(56) References cited:
- WO-A1-2013/089880
- CN-A- 106 079 688
- CN-A- 108 437 574
- CN-A- 110 323 383
- CN-A- 110 636 158
- CN-A- 110 712 403
- CN-A- 110 843 274
- CN-U- 205 767 810
- CN-U- 211 018 910
- US-A1- 2013 078 398
- US-A1- 2019 101 960

## Description

### TECHNICAL FIELD

This application relates to the field of terminal technologies, and in particular, a rear cover, and an electronic device.

### BACKGROUND

Due to nice appearance, jade-like luster, and smooth hand feeling of ceramics, application of ceramics to electronic devices such as mobile phones and tablets has been gradually favored and popularized by consumers. In addition, ceramics have high hardness and abrasion resistance, and an outer housing of a mobile phone made of ceramics will not be scratched or abraded during use, so that the mobile phone can stay new for a long time. Therefore, such an outer housing is environmentally friendly and boasts a relatively high ornamental value.

At present, when a ceramic material is applied to a mobile phone, the ceramic material is mainly made into a ceramic rear cover or a ceramic middle frame. However, ceramics are relatively heavy, resulting in an increase in a weight of the entire mobile phone; and when a thickness of the ceramic rear cover or the ceramic middle frame is reduced to reduce the weight of the entire mobile phone, a strength of the ceramic rear cover or the ceramic middle frame cannot satisfy a requirement. Therefore, during use of a ceramic rear cover or a ceramic middle frame, how to reduce a weight of a mobile phone while satisfying a strength requirement is an issue that needs to be urgently resolved in the industry.

CN205767810 U discloses a toughened structure comprising at least one ceramic substrate and at least one reinforcing fiber cloth. US2019/101960 A1 discloses electronic devices with multi-part enclosures. CN106079688 A discloses a toughened structure and preparation method, the structure comprising at least one ceramic substrate and at least one reinforcing fiber cloth. CN108437574 A discloses an anti-impact casing material, production method thereof, a production method of a digital product casing, and a digital product casing.

### SUMMARY

Present invention provides a rear cover and an electronic device, to reduce thicknesses of a ceramic outer frame and a ceramic outer housing while satisfying a strength requirement of frames of a rear cover and a middle frame, thereby reducing a weight of an electronic device. The invention is defined by the appended claims. Embodiments not falling within the scope of the claims are exemplary.

A first aspect of the present invention provides a rear cover, including a ceramic outer housing and an inner housing made of a fiber reinforced composite, where the inner housing is disposed on an inner surface of the ceramic outer housing.

The rear cover includes the ceramic outer housing and the inner housing made of the fiber reinforced composite. In this way, a thickness of the ceramic outer housing can be reduced, so that a weight of an electronic device is reduced. In addition, an inner side of the rear cover is the inner housing made of the fiber reinforced composite, so that the inner housing made of the fiber reinforced composite can provide strength support, and therefore the rear cover satisfies a strength requirement on a premise of reducing the thickness of the ceramic outer housing. Moreover, because a strength of the inner housing made of the fiber reinforced composite is relatively high, the inner housing can be designed to be thinner, so that a thickness of the rear cover is smaller. Furthermore, the inner side of the rear cover is the inner housing made of the fiber reinforced composite, and the inner housing has specific toughness; therefore, a complex inner structure design is easily made on an inner surface of the inner housing. This avoids a problem of a relatively great difficulty in making the inner structure design on the ceramic outer housing that has relatively high hardness. In this embodiment of this application, an outer side of the rear cover is the ceramic outer housing, so that high quality and hardness of the housing of the electronic device are implemented.

In an example, orthographic projection of the inner housing toward the inner surface of the ceramic outer housing completely covers the inner surface of the ceramic outer housing. In this way, the inner surface of the ceramic outer housing is completely covered by the inner housing made of the fiber reinforced composite, and the thickness of the ceramic outer housing can be reduced on a premise of satisfying a strength of the rear cover, thereby reducing the weight of the electronic device.

Orthographic projection of the inner housing toward the inner surface of the ceramic outer housing partially covers the inner surface of the ceramic outer housing. In this way, bending of the inner housing made of the fiber reinforced composite in an arc-shaped region of the ceramic outer housing can be reduced, and fracture of the inner housing made of the fiber reinforced composite in a press fitting process can be reduced or avoided.

The rear cover further includes an adhesive layer. The adhesive layer is located between the ceramic outer housing and the inner housing, and the ceramic outer housing, the adhesive layer, and the inner housing are press-fitted to form the rear cover.

The adhesive layer is disposed, so that the ceramic outer housing and the inner housing are pre-fastened together before press fitting, to facilitate press fitting; and the adhesive layer enables the ceramic outer housing and the inner housing to be tightly bonded after the press fitting, to increase binding force between the ceramic outer housing and the inner housing.

In a possible implementation, the fiber reinforced composite is a composite plate made of a plastic matrix and reinforcing fiber, where the reinforcing fiber includes one or more of glass fiber, carbon fiber, boron nitride fiber, silicon carbide fiber, alumina fiber, boron fiber, zirconia fiber, aramid fiber, or ultra-high-molecular-weight polyethylene fiber. In this way, the inner housing made of the fiber reinforced composite has a higher strength and a smaller thickness. In addition, adding the reinforcing fiber makes the composite plate have specific toughness. Therefore, the inner housing is fabricated conveniently, and the inner housing and the ceramic outer housing are not easily cracked in the press fitting process.

In a possible implementation, the fiber reinforced composite is a glass fiber plate made of a plastic matrix and glass fiber, where the inner housing is a housing made of the glass fiber plate. The glass fiber plate has a relatively high strength and a relatively small thickness. In this way, the inner housing made of the glass fiber plate is thinner on a premise of satisfying a strength requirement, so that a thickness and a weight of the rear cover are reduced.

In a possible implementation, a wall thickness of the ceramic outer housing is 0.15 mm to 0.6 mm, and a wall thickness of the inner housing is 0.1 mm to 1 mm. In this way, the wall thicknesses of the inner housing and the ceramic outer housing are reduced; and in comparison with an all-ceramic rear cover, the weight and the thickness of the rear cover in this application are reduced.

In a possible implementation, a ceramic strength of the ceramic outer housing is 300 MPa to 1700 MPa, and a ceramic fracture toughness of the ceramic outer housing is 2 MPa m^{1/2} to 16 MPa·m^{1/2}.

In a possible implementation, a material of the ceramic outer housing includes zirconia, silicon carbide, silicon nitride, aluminum nitride, or alumina ceramics.

In a possible implementation, a flexural strength of the fiber reinforced composite may be greater than or equal to 450 MPa, and a flexural modulus of the fiber reinforced composite may be greater than or equal to 25 GPa.

In a possible implementation, the rear cover further includes at least one antenna. The antenna includes an antenna radiator and a feed point and a ground point that are electrically connected to the antenna radiator. The antenna radiator is disposed between the ceramic outer housing and the inner housing, or the antenna radiator is disposed on the inner surface of the ceramic outer housing. In this way, the antenna radiator is located between the ceramic outer housing and the inner housing, so that the antenna radiator is borne inside the rear cover; and the antenna radiator is hidden between the ceramic outer housing and the inner housing, so that the antenna radiator is invisible on the rear cover.

In a possible implementation, a clearance of the antenna is less than 10 mm. This reduces interference from metal surrounding the antenna to the antenna, thereby ensuring antenna radiation efficiency.

In a possible implementation, an impedance of the antenna is less than or equal to 5 Ω. This makes conductivity of the antenna higher and a radiation capability of the antenna stronger.

The ceramic outer housing includes at least a planar region and an arc-shaped region. The arc-shaped region is located at an outer edge of the planar region, and the inner housing covers an entire inner surface of the planar region. In this way, bending of the inner housing is avoided, and fracture of the inner housing in the press fitting process is avoided.

The inner housing covers an entire inner surface of the planar region and a partial inner surface of the arc-shaped region. In this way, a degree of bending of the inner housing in the arc-shaped region of the ceramic outer housing is reduced, thereby reducing a risk of fracture of the material of the inner housing in the press fitting process.

In a possible implementation, the rear cover includes a bottom housing and a side frame, and the side frame encloses an outer edge of the bottom housing. In this way, the rear cover has the bottom housing and the side frame, and when the rear cover is used in the electronic device, the side frame may be used as an outer frame of the electronic device.

In a possible implementation, the ceramic outer housing includes an outer bottom housing and an outer side housing that encloses an outer edge of the outer bottom housing, and the inner housing covers at least an inner surface of the outer bottom housing.

In a possible implementation, there is an arc-shaped connection region between the outer bottom housing and the outer side housing, there is an arc-shaped region on an outer edge of the inner housing, and the arc-shaped region covers an inner surface of the arc-shaped connection region.

In a possible implementation, the inner housing includes an inner bottom housing and an inner side housing that encloses an outer edge of the inner bottom housing, where the inner bottom housing covers the inner surface of the outer bottom housing, and the inner side housing covers an inner surface of the outer side housing. The outer bottom housing and the inner bottom housing form the bottom housing of the rear cover, and the outer side housing and the inner side housing form the side frame of the rear cover. In this way, an entire outer side face and outer bottom face of the rear cover are made of ceramic materials, and an entire inner side face and inner bottom face are made of fiber reinforced composites. When the rear cover is applied to the electronic device, outer surfaces of both the outer frame and the bottom housing of the electronic device are made of ceramic materials. In this way, the outer surface of the electronic device is disposed by using only ceramics on a premise of reducing the weight of the rear cover.

In a possible implementation, when the orthographic projection of the inner housing toward the inner surface of the ceramic outer housing partially covers the inner surface of the ceramic outer housing, the rear cover further includes:
a protective film, where the protective film covers at least an exposed inner surface of the ceramic outer housing. Based on the protective film, the exposed inner surface of the ceramic outer housing is shielded, and a problem that the inner surface of the ceramic outer housing scratches a battery or another electronic component is avoided.

In a possible implementation, one end of the protective film extends to an inner surface of the inner housing. In this way, an inner surface of the rear cover is smoothly transitioned, and nice appearance of the inner surface of the rear cover is ensured. In addition, when the protective film shields a location at which the outer edge of the inner housing overlaps the ceramic outer housing, a foreign matter such as vapor or dust does not easily accumulate at the location at which the outer edge of the inner housing overlaps the ceramic outer housing. Moreover, after the protective film shields the outer edge of the inner housing, the outer edge of the inner housing made of the fiber reinforced composite such as the glass fiber plate or the carbon fiber plate is not exposed. This avoids that the outer edge of the inner housing made of the glass fiber plate or the carbon fiber plate scratches the battery or the electronic component, thereby ensuring that a component in the electronic device is not easily damaged during collision or installation.

Alternatively, one end of the protective film extends between the inner housing and the ceramic outer housing.

In a possible implementation, the protective film is an explosion-proof film or an adhesive layer. When the protective film is an adhesive layer, the protective film can cushion the battery or the electronic component when the electronic device is hit. This avoids that the battery or the electronic component is damaged due to a collision with the rear cover. In addition, when the protective film is an adhesive layer, the protective film can have a seal effect, thereby preventing vapor from entering a location between the inner housing and the ceramic outer housing. Moreover, the adhesive layer extends to the inner housing, so that the inner housing and the ceramic outer housing can be further fastened.

A second aspect of the present invention provides an electronic device. The electronic device includes at least a display screen and the foregoing rear cover, where the display screen and the rear cover form accommodating space that may be used for accommodating components. Alternatively, the electronic device includes at least a display screen, a middle frame, and the foregoing rear cover, where the display screen and the rear cover are respectively located on two sides of the middle frame. The foregoing rear cover is included. In this way, a weight of the rear cover is reduced, so that a weight of the electronic device is reduced. In addition, a complex inner structure design is easily made on an inner housing of the electronic device. This avoids a problem of a relatively great difficulty in making the inner structure design on a ceramic outer housing that has relatively high hardness.

A third aspect of the embodiments of this application provides a middle frame, including at least a metal middle plate and a frame that encloses an outer edge of the metal middle plate, where
the frame includes an inner frame made of a fiber reinforced composite and a ceramic outer frame that encloses an outer side face of the inner frame, and an inner side face of the inner frame is connected to the outer edge of the metal middle plate.

The inner frame and the ceramic outer frame are included. In this way, a thickness of the ceramic outer frame can be reduced, so that a weight of the frame is reduced, and a weight of an electronic device is reduced. In addition, an inner side of the frame is the frame made of the fiber reinforced composite, so that the inner frame can provide strength support for the ceramic outer frame, and therefore the frame satisfies a strength requirement on a premise of reducing the thickness of the ceramic outer frame. Moreover, the inner side of the frame is the frame made of the fiber reinforced composite, and therefore a complex inner structure design is easily made on the frame made of the fiber reinforced composite. This avoids a problem of a relatively great difficulty in making the inner structure design on the ceramic outer frame that has relatively high hardness. In this embodiment of this application, an outer side of the frame of the electronic device is the ceramic frame, so that high quality and hardness of the frame of the electronic device are implemented.

In a possible implementation, the middle frame further includes an adhesive layer. The adhesive layer is located between the ceramic outer frame and the inner frame, and the ceramic outer frame, the adhesive layer, and the inner frame are press-fitted to form the frame.

The adhesive layer is disposed, so that the ceramic outer frame and the inner frame are pre-fastened together before press fitting, to facilitate press fitting; and the adhesive layer enables the ceramic outer frame and the inner frame to be tightly bonded after the press fitting, to increase binding force between the ceramic outer frame and the inner frame.

In a possible implementation, the fiber reinforced composite is a composite plate made of a plastic matrix and reinforcing fiber, where the reinforcing fiber includes one or more of glass fiber, carbon fiber, boron nitride fiber, silicon carbide fiber, alumina fiber, boron fiber, zirconia fiber, aramid fiber, or ultra-high-molecular-weight polyethylene fiber. In this way, the inner frame made of the fiber reinforced composite has a higher strength and a smaller thickness. In addition, adding the reinforcing fiber makes the composite plate have specific toughness. Therefore, the inner frame is fabricated conveniently, and the inner frame and the ceramic outer frame are not easily cracked in a press fitting process.

In a possible implementation, the fiber reinforced composite is a glass fiber plate made of a plastic matrix and glass fiber, where the inner frame is a frame made of the glass fiber plate. The glass fiber plate has a relatively high strength and a relatively small thickness. In this way, the inner frame made of the glass fiber plate is thinner on a premise of satisfying a strength requirement, so that a thickness and a weight of the middle frame are reduced.

In a possible implementation, a wall thickness of the ceramic outer frame is 0.15 mm to 0.6 mm, and a wall thickness of the inner frame is 0.1 mm to 1 mm. In this way, the wall thicknesses of the inner frame and the ceramic outer frame are reduced; and in comparison with an all-ceramic frame, the weight and the thickness of the middle frame in this application are reduced.

In a possible implementation, a ceramic strength of the ceramic outer frame is 300 MPa to 1700 MPa, and a ceramic fracture toughness of the ceramic outer frame is 2 MPa m^{1/2} to 16 MPa·m^{1/2}.

In a possible implementation, a flexural strength of the fiber reinforced composite may be greater than or equal to 450 MPa, and a flexural modulus of the fiber reinforced composite may be greater than or equal to 25 GPa.

In a possible implementation, the middle frame further includes at least one antenna. The antenna includes an antenna radiator and a feed point and a ground point that are electrically connected to the antenna radiator. The antenna radiator is disposed between the ceramic outer frame and the inner frame. In this way, the antenna radiator is located between the ceramic outer frame and the inner frame, so that the antenna radiator is borne inside the middle frame; and the antenna radiator is hidden between the ceramic outer frame and the inner frame, so that the antenna radiator is invisible on the frame.

In a possible implementation, a clearance of the antenna is less than 10 mm. This reduces interference from metal surrounding the antenna to the antenna, thereby ensuring antenna radiation efficiency.

In a possible implementation, an impedance of the antenna is less than or equal to 5 Ω. This makes conductivity of the antenna higher and a radiation capability of the antenna stronger.

In a possible implementation, the ceramic outer frame is a seamless ceramic frame; or the ceramic outer frame includes a plurality of ceramic sub-frames, and the plurality of ceramic sub-frames are connected to form the ceramic outer frame in a ring shape.

A fourth aspect of the embodiments of this application provides an electronic device. The electronic device includes at least a display screen, a rear cover, and the foregoing middle frame, where the display screen and the rear cover are respectively located on two sides of the middle frame. Alternatively, the electronic device includes at least a display screen, the foregoing rear cover, and the foregoing middle frame, where the display screen and the rear cover are respectively located on two sides of the middle frame.

The foregoing middle frame is included. In this way, a weight of the middle frame is reduced, so that a weight of the electronic device is reduced. In addition, a complex inner structure design is easily made on an inner frame of the electronic device. This avoids a problem of a relatively great difficulty in making the inner structure design on a ceramic outer frame that has relatively high hardness.

A fifth aspect of the embodiments of this application provides a fabrication method for a rear cover, where the method includes:
providing a ceramic outer housing and an inner housing made of a fiber reinforced composite;
forming an adhesive layer between the ceramic outer housing and the inner housing; and
press-fitting the ceramic outer housing, the adhesive layer, and the inner housing to form the rear cover.

The outer housing, the adhesive layer, and the inner housing are press-fitted to form the rear cover. In this way, a weight of the fabricated rear cover is reduced. In addition, the ceramic outer housing and the inner housing are fastened together in a press fitting process, to form the rear cover with a double-layer structure whose outer surface is made of ceramics and whose inner surface is made of the fiber reinforced composite. Therefore, a fabrication process is simple and reliable.

In a possible implementation, before the forming an adhesive layer between the outer housing and the inner housing, the method further includes:
disposing an antenna radiator between the ceramic outer housing and the inner housing.

In the press fitting process, the antenna radiator is disposed between the ceramic outer housing and the inner housing. In this way, the antenna radiator is disposed inside the rear cover.

A sixth aspect of the embodiments of this application provides a fabrication method for a middle frame, where the method includes:
providing a ceramic outer frame, an inner frame made of a fiber reinforced composite, and a metal middle plate;
forming an adhesive layer between the ceramic outer frame and the inner frame;
press-fitting the ceramic outer frame, the adhesive layer, and the inner frame to form a frame; and
connecting the frame and an outer edge of the metal middle plate to form the middle frame.

The ceramic outer frame, the adhesive layer, and the inner frame are press-fitted to form the frame. In this way, a weight of the fabricated frame is reduced. In addition, the ceramic outer frame and the inner frame are fastened together in a press fitting process, to form the frame with a double-layer structure whose outer surface is made of ceramics and whose inner surface is made of the fiber reinforced composite. Therefore, a fabrication process is simple and reliable.

In a possible implementation, before the forming an adhesive layer between the ceramic outer frame and the inner frame, the method further includes:
disposing an antenna radiator between the ceramic outer frame and the inner frame.

In the press fitting process, the antenna radiator is disposed between the ceramic outer frame and the inner frame. In this way, the antenna radiator is disposed inside the frame.

### BRIEF DESCRIPTION OF DRAWINGS

FIG. 1 is a schematic three-dimensional structural diagram of an electronic device according to an embodiment of this application;
FIG. 2 is a schematic exploded structural diagram of an electronic device according to an embodiment of this application;
FIG. 3 is a schematic exploded structural diagram of a middle frame of an electronic device according to an embodiment of this application;
FIG. 4A is a schematic split structural diagram of a rear cover of an electronic device according to an embodiment of this application;
FIG. 4B is a schematic cross-sectional structural diagram of a rear cover of an electronic device according to an embodiment of this application;
FIG. 4C is a schematic cross-sectional structural diagram of a rear cover of an electronic device according to an embodiment of this application;
FIG. 4D is a schematic cross-sectional structural diagram of a rear cover of an electronic device according to an embodiment of this application;
FIG. 4E is a schematic cross-sectional structural diagram of a rear cover of an electronic device according to an embodiment of this application;
FIG. 4F is a schematic cross-sectional structural diagram of a rear cover of an electronic device according to an embodiment of this application;
FIG. 4G is a schematic cross-sectional structural diagram of a rear cover of an electronic device according to an embodiment of this application;
FIG. 4H is a schematic cross-sectional structural diagram of a rear cover of an electronic device according to an embodiment of this application;
FIG. 5 is a schematic diagram of a split cross-section structure of a ceramic outer frame, an inner frame, and antenna radiators in an electronic device according to an embodiment of this application;
FIG. 6 is a schematic diagram of a circuit theory of a ceramic outer frame, an inner frame, and antennas in an electronic device according to an embodiment of this application;
FIG. 7 is a schematic structural diagram of a ceramic outer frame of an electronic device according to an embodiment of this application;
FIG. 8 is a schematic structural diagram of a ceramic outer frame, an inner frame, and antenna radiators in an electronic device according to an embodiment of this application;
FIG. 9A is a schematic split structural diagram of a ceramic outer housing, an inner housing, and antenna radiators in an electronic device according to an embodiment of this application;
FIG. 9B is a schematic cross-sectional structural diagram of a ceramic outer housing, an inner housing, and antenna radiators in an electronic device according to an embodiment of this application;
FIG. 9C is a schematic cross-sectional structural diagram of a ceramic outer housing, an inner housing, and antenna radiators in an electronic device according to an embodiment of this application;
FIG. 9D is a schematic cross-sectional structural diagram of a ceramic outer housing, an inner housing, and antenna radiators in an electronic device according to an embodiment of this application;
FIG. 10 is another schematic three-dimensional structural diagram of an electronic device according to an embodiment of this application;
FIG. 11 is a schematic exploded structural diagram of an electronic device according to an embodiment of this application;
FIG. 12 is a schematic exploded structural diagram of a battery cover of an electronic device according to an embodiment of this application;
FIG. 13 is a schematic cross-sectional structural diagram of a battery cover of an electronic device according to an embodiment of this application;
FIG. 14 is a schematic partial cross-sectional structural diagram of a battery cover and an antenna radiator in an electronic device according to an embodiment of this application;
FIG. 15 is another schematic partial cross-sectional structural diagram of a battery cover and an antenna radiator in an electronic device according to an embodiment of this application;
FIG. 16A is a schematic cross-sectional structural diagram of a battery cover of an electronic device according to an embodiment of this application;
FIG. 16B is a schematic cross-sectional structural diagram of a battery cover of an electronic device according to an embodiment of this application;
FIG. 16C is a schematic cross-sectional structural diagram of a battery cover of an electronic device according to an embodiment of this application;
FIG. 16D is a schematic cross-sectional structural diagram of a battery cover of an electronic device according to an embodiment of this application;
FIG. 16E is a schematic cross-sectional structural diagram of a battery cover of an electronic device according to an embodiment of this application; and
FIG. 16F is a schematic cross-sectional structural diagram of a battery cover and antennas in an electronic device according to an embodiment of this application.

### Reference numerals:

100 and 200: mobile phones; 10 and 210: display screens; 20: middle frame; 21: metal middle plate; 22: frame;
221: ceramic outer frame; 2211: first ceramic sub-frame; 2212: second ceramic sub-frame;
2213: third ceramic sub-frame; 2214: fourth ceramic sub-frame; 2215: fifth ceramic sub-frame;
2216: sixth ceramic sub-frame; 2217: seventh ceramic sub-frame; 2218: eighth ceramic sub-frame;
222: inner frame; 30 and 230: circuit boards; 40 and 240: batteries; 50: rear cover;
61 and 261: first antenna radiators; 62 and 262: second antenna radiators;
63 and 263: third antenna radiators; 64: fourth antenna radiator; 65: fifth antenna radiator;
66: sixth antenna radiator; 601: first antenna; 602: second antenna; 603: third antenna;
604: fourth antenna; 605: fifth antenna; 606: sixth antenna;
A1, A2, A3, A4, A5, A6, b1, b2, b3, b4, b5, and b6: corners; a1: first feed point;
a2: second feed point; a3: third feed point; a4: fourth feed point; a5: fifth feed point; a6: sixth feed point;
B1: first feed; B2: second feed; B3: third feed; B4: fourth feed; B5: fifth feed;
B6: sixth feed; c1: first ground point; c2: second ground point; c3: third ground point;
c4: fourth ground point; c5: fifth ground point; c6: sixth ground point; 220: middle plate; 250: rear cover;
52 and 251: ceramic outer housings; 2511: outer side housing; 2512: outer bottom housing; 51 and 252: inner housings; 2521: inner side housing;
2522: inner bottom housing; 260: antenna radiator; 53 and 253: adhesive layers; 254 and 54: protective layers; and
2513: arc-shaped connection region; and 2523: arc-shaped region.

### DESCRIPTION OF EMBODIMENTS

Terms used in the implementations of this application are merely intended to interpret specific embodiments of this application, but are not intended to limit this application. The following details the implementations of the embodiments of this application with reference to the accompanying drawings.

The embodiments of this application provide an electronic device. The electronic device includes but is not limited to a mobile or fixed terminal that has a frame or a housing, such as a mobile phone, a tablet computer, a notebook computer, an ultra-mobile personal computer (ultra-mobile personal computer, UMPC), a handheld computer, a walkie-talkie, a netbook, a POS terminal, a personal digital assistant (personal digital assistant, PDA), an event data recorder, a wearable device, a virtual reality device, a wireless USB flash drive, a Bluetooth speaker/headset, or a vehicle-mounted device.

In the embodiments of this application, that a mobile phone 100 is the foregoing electronic device is used as an example for description. A scenario 1 is a scenario in which frames in a middle frame of the mobile phone 100 use a ceramic outer frame and an inner frame. A scenario 2 is a scenario in which antenna radiators are disposed between a ceramic outer frame and an inner frame in the mobile phone 100. A scenario 3 is a scenario in which a battery cover of the mobile phone 100 uses a ceramic outer housing and an inner housing.

The following separately describes a structure of the mobile phone 100 specific to the scenario 1, the scenario 2, and the scenario 3.

### Scenario 1

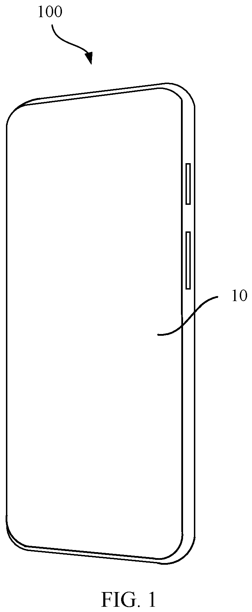

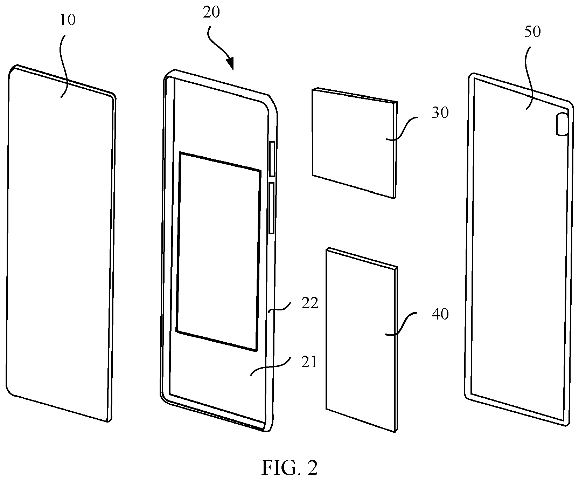

In this embodiment of this application, referring to FIG. 1 and FIG. 2, the mobile phone 100 may include a display screen 10 and a rear cover 50, and a middle frame 20, a circuit board 30, and a battery 40 may be disposed between the display screen 10 and the rear cover 50. The circuit board 30 and the battery 40 may be disposed on the middle frame 20. For example, the circuit board 30 and the battery 40 are disposed on a side that is of the middle frame 20 and that faces the rear cover 50, or the circuit board 30 and the battery 40 may be disposed on a side that is of the middle frame 20 and that faces the display screen 10. When the circuit board 30 is disposed on the middle frame 20, an opening may be provided on the middle frame 20. An element on the circuit board 30 is disposed at the opening of the middle frame 20.

When the battery 40 is disposed on the middle frame 20, for example, a battery compartment may be disposed on the side that is of the middle frame 20 and that faces the rear cover 50. The battery 40 is installed inside the battery compartment (which is denoted as a dashed-line box in FIG. 2). In this embodiment of this application, the battery 40 may be connected to the circuit board 30 through a power management module and a charging management module. The power management module receives an input of the battery 40 and/or the charging management module, and supplies power to a processor, an internal memory, an external memory, the display screen 10, a camera, a communications module, and the like. The power management module may further be configured to monitor parameters such as a capacity of the battery 40, a quantity of cycles of the battery 40, and a health status (an electric leakage or an impedance) of the battery 40. In some other embodiments, the power management module may alternatively be disposed in the processor of the circuit board 30. In still some other embodiments, the power management module and the charging management module may alternatively be disposed in a same component.

The display screen 10 may be an organic light-emitting diode (Organic Light-Emitting Diode, OLED) display, or may be a liquid crystal display (Liquid Crystal Display, LCD). It should be understood that the display screen 10 may include a display and a touch component. The display is configured to output display content to a user, and the touch component is configured to receive a touch event entered by the user on the display screen 10.

The rear cover 50 may be a metal rear cover, a glass rear cover, a plastic rear cover, or a ceramic rear cover. A material of the rear cover 50 is not limited in this embodiment of this application.

It can be understood that the structure illustrated in this embodiment of this application does not constitute any specific limitation on the mobile phone 100. In some other embodiments of this application, the mobile phone 100 may include more or fewer components than those shown in the figure, a combination of some components, splitting of some components, or a different arrangement of the components. For example, the mobile phone 100 may further include components such as cameras (for example, a front-facing camera and a rear-facing camera) and a flash.

In this embodiment of this application, as shown in FIG. 2, the middle frame 20 may include a metal middle plate 21 and a frame 22, and the frame 22 is disposed around a periphery of the metal middle plate 21. For example, the frame 22 may include a top edge and a bottom edge that are disposed opposite to each other, and a left side and a right side that are disposed opposite to each other and that are located between the top edge and the bottom edge. A connection manner between the frame 22 and the metal middle plate 21 includes but is not limited to welding, clamping, and integrated injection molding. A material of the metal middle plate 21 may be aluminum or aluminum alloy, or a material of the metal middle plate 21 may be a stainless steel material. It should be noted that the material of the metal middle plate 21 includes but is not limited to the foregoing materials.

The frame 22 may usually be a metal frame, a glass frame, a plastic frame, or a ceramic frame. However, when a metal frame is used, break-joint needs to be performed on the metal frame to form an antenna radiator, causing a break joint on the metal frame. As a result, appearance of the metal frame is affected, and due to the break joint, a strength of the metal frame is affected and integrity of a metal middle frame is impaired. When a glass frame is used, the mobile phone 100 is easily fractured after the mobile phone 100 falls. When a plastic frame is used, flatness of a plastic surface and a texture that is obtained through surface treatment cannot satisfy a requirement of the user for appearance of the mobile phone 100. When a ceramic frame is used, the ceramic frame is 15 g to 18 g heavier than a glass frame that has a same thickness as the ceramic frame; but when the thickness of the ceramic frame is reduced, a strength of the ceramic frame cannot satisfy a requirement. In addition, when the ceramic frame is used, a complex inner structure design is not easily made on the ceramic frame because of relatively high hardness of ceramics.

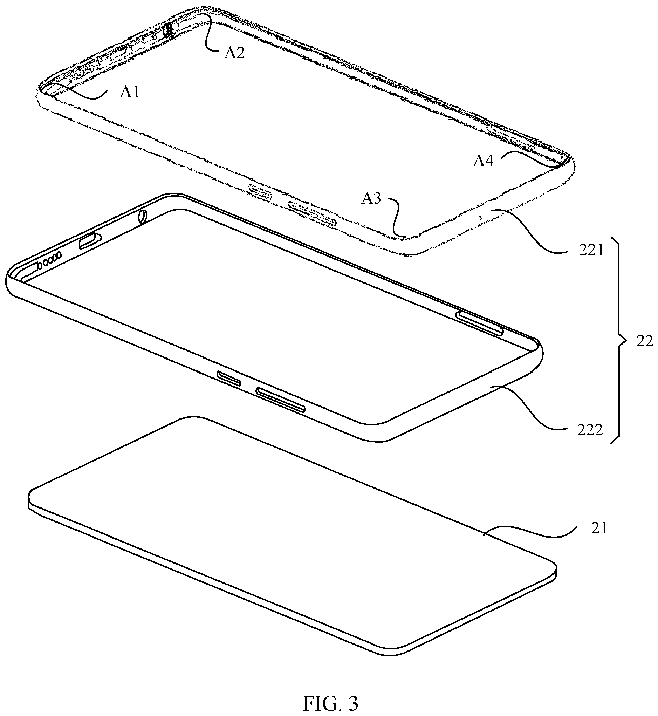

Based on the foregoing descriptions, in this embodiment of this application, as shown in FIG. 3, the frame 22 may include an inner frame 222 made of a fiber reinforced composite and a ceramic outer frame 221. The ceramic outer frame 221 may enclose an outer side face of the inner frame 222, to form the frame 22 that includes the inner frame 222 and the outer frame and that is with a double-layer structure. When the ceramic outer frame 221 and the inner frame 222 are disposed, the ceramic outer frame 221 and the inner frame 222 may be nested together with each other, the ceramic outer frame 221 is located on an outer side, and the inner frame 222 is located on an inner side. The ceramic outer frame 221, the inner frame 222, and the metal middle plate 21 form the middle frame 20 of the electronic device.

In this embodiment of this application, the inner frame 222 may be a frame made of a fiber reinforced composite (Fiber Reinforced Polymer, FRP). The fiber reinforced composite may be, for example, a composite plate formed by performing a molding process on a matrix material (Matrix) and reinforcing fiber (that is, reinforcement (Reinforcement)).

The reinforcing fiber may include but is not limited to glass fiber, carbon fiber, boron nitride fiber, silicon carbide fiber, alumina fiber, boron fiber, zirconia fiber, aramid fiber, or ultra-high-molecular-weight polyethylene fiber. The reinforcing fiber may be short fiber whose length is 0.1 mm to 2 mm, or the reinforcing fiber may be long fiber whose length is greater than 2 mm. The matrix material may be a plastic matrix. For example, the fiber reinforced composite may be a glass fiber plate made of glass fiber (for example, long fiber) and a plastic material (for example, plastics), or the fiber reinforced composite may be a carbon fiber plate made of carbon fiber and a plastic material. In this case, the inner frame 222 may be a frame made of a glass fiber plate or a carbon fiber plate. In this embodiment of this application, the frame 22 is a two-layer frame including the ceramic outer frame 221 and the inner frame 222 made of the fiber reinforced composite. Because the inner frame 222 made of the fiber reinforced composite contains the reinforcing fiber, the inner frame 222 made of the fiber reinforced composite has a relatively high strength and specific toughness, so that the inner frame 222 made of the fiber reinforced composite can provide strength support. In this way, a thickness of the ceramic outer frame 221 can be reduced, so that a weight of the frame 22 including the ceramic outer frame 221 and the inner frame 222 made of the fiber reinforced composite can be greatly reduced, and a strength requirement of the frame 22 can be satisfied.

In this embodiment of this application, it should be noted that, when the ceramic outer frame 221 and the inner frame 222 form the frame 22, the inner frame 222 may be disposed around an inner side wall of the ceramic outer frame 221, so that the inner frame 222 can cover the entire inner side wall of the ceramic outer frame 221.

It is detected that a weight of the middle frame 20 including the metal middle plate 21, the inner frame 222 made of the fiber reinforced composite, and the ceramic outer frame 221 is reduced by 5 g to 20 g, compared with a middle frame that includes an all-ceramic outer frame and a metal middle plate and that has a same size as the middle frame 20. The weight of the middle frame 20 including the metal middle plate 21, the inner frame 222 made of the fiber reinforced composite, and the ceramic outer frame 221 approximates to a weight of a metal middle frame that has the same size as the middle frame 20.

In the electronic device provided in this application, the frame 22 includes the ceramic outer frame 221 and the inner frame 222 made of the fiber reinforced composite. In this way, the thickness of the ceramic outer frame 221 can be reduced, so that a weight of the electronic device is reduced. In addition, an inner side of the frame 22 is the inner frame 222 made of the fiber reinforced composite, so that the inner frame 222 can provide strength support for the ceramic outer frame 221, and therefore the frame 22 satisfies a strength requirement on a premise of reducing the thickness of the ceramic outer frame 221. Moreover, the inner side of the frame 22 is the inner frame 222 made of the fiber reinforced composite, and the inner frame 222 has specific toughness; therefore, a complex inner structure design is easily made on the inner frame 222. This avoids a problem of a relatively great difficulty in making the inner structure design on the ceramic outer frame 221 that has relatively high hardness. In this embodiment of this application, an outer side of the frame 22 of the electronic device is the ceramic outer frame 221, so that high quality and hardness of the frame 22 of the electronic device are implemented.

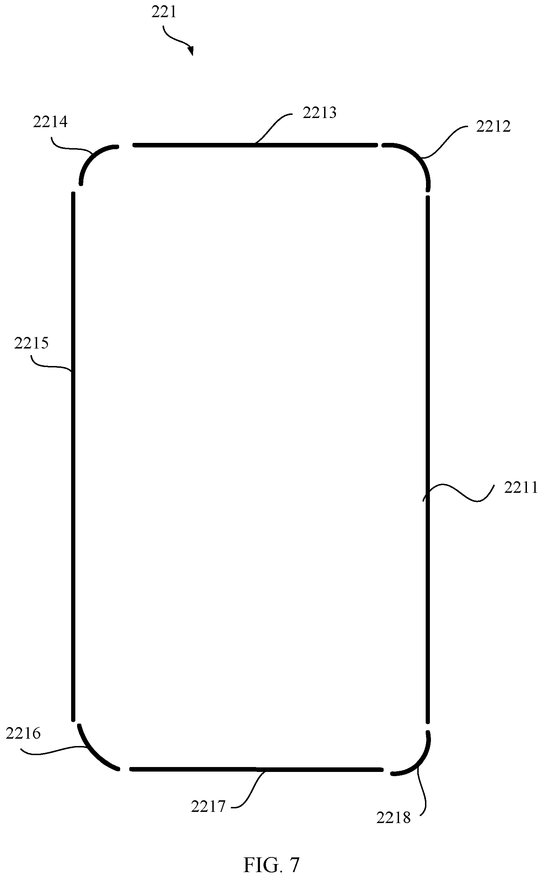

In a possible implementation, as shown in FIG. 3, the ceramic outer frame 221 may be of a seamless ring structure. For example, the ceramic outer frame 221 is of a square ring structure, where the square ring structure may be a continuous ring structure. Alternatively, the ceramic outer frame 221 may be of a ring structure (referring to FIG. 7 below) formed by splicing a plurality of frames. The inner frame 222 made of the fiber reinforced composite may be of a ring structure disposed around the inner side wall of the ceramic outer frame 221.

In a possible implementation, as shown in FIG. 3, the ceramic outer frame 221 has four corners: a corner A1, a corner A2, a corner A3, and a corner A4. To ensure that the four corners are not easily damaged after the mobile phone falls, a side wall thickness of the ceramic outer frame 221 at the four corners may be made greater than a side wall thickness of the ceramic outer frame 221 at a non-corner. In this way, it can be ensured that a strength of the ceramic outer frame 221 at the corners is relatively high, and the four corners of the electronic device are not easily damaged after the electronic device falls.

In a possible implementation, when the ceramic outer frame 221 is made of a ceramic material, a strength of the ceramic material may be 300 MPa to 1700 MPa. For example, a ceramic strength of the ceramic outer frame 221 may be 1100 MPa, or a ceramic strength of the ceramic outer frame 221 may be 1200 MPa. A ceramic fracture toughness of the ceramic outer frame 221 is 2 MPa m^{1/2} to 16 MPa·m^{1/2}. For example, the ceramic fracture toughness of the ceramic outer frame 221 may be 8 MPa·m^{1/2}, or the ceramic fracture toughness of the ceramic outer frame 221 may be 10 MPa·m^{1/2}.

In a possible implementation, when the inner frame 222 is made of the fiber reinforced composite, a flexural strength of the fiber reinforced composite may be greater than or equal to 450 MPa. For example, the flexural strength of the fiber reinforced composite may be 600 MPa, or the flexural strength of the fiber reinforced composite may be 1000 MPa. A flexural modulus of the fiber reinforced composite may be greater than or equal to 25 GPa. For example, the flexural modulus of the fiber reinforced composite may be 30 GPa, or the flexural modulus of the fiber reinforced composite may be 40 GPa. In this way, the inner frame 222 made of the fiber reinforced composite and the ceramic outer frame 221 are not easily fractured in a press fitting process, thereby ensuring that the inner frame 222 has a relatively high strength and a relatively desirable flexural property.

In a possible implementation, a material of the ceramic outer frame 221 may include but is not limited to a ceramic material such as zirconia, silicon carbide, silicon nitride, aluminum nitride, or alumina. For example, the material of the ceramic outer frame 221 may be a zirconia ceramic sheet, or the material of the ceramic outer frame 221 may be an alumina ceramic sheet. It should be understood that, that the material of the ceramic outer frame 221 is zirconia, silicon carbide, silicon nitride, aluminum nitride, or alumina mainly means that when the ceramic outer frame 221 is made of a ceramic material, a main raw material in the ceramic material is zirconia, silicon carbide, silicon nitride, aluminum nitride, or alumina.

In a possible implementation, a wall thickness of the ceramic outer frame 221 may be 0.15 mm to 0.6 mm. For example, the wall thickness of the ceramic outer frame 221 may be 0.2 mm, or the wall thickness of the ceramic outer frame 221 may be 0.45 mm. A wall thickness of the inner frame 222 made of the fiber reinforced composite may be 0.1 mm to 1 mm. For example, the wall thickness of the inner frame 222 made of the fiber reinforced composite may be 0.15 mm, or the wall thickness of the inner frame 222 made of the fiber reinforced composite may be 0.3 mm. In this case, a thickness of the frame 22 including the ceramic outer frame 221 and the inner frame 222 made of the fiber reinforced composite may be 0.25 mm to 1.6 mm. For example, the thickness of the frame 22 may be 0.45 mm, or the thickness of the frame 22 may be 1.2 mm.

In a possible implementation, during assembly of the ceramic outer frame 221, the inner frame 222 made of the fiber reinforced composite, and the metal middle plate 21, the ceramic outer frame 221 and the inner frame 222 may be press-fitted to form an overall frame structure, and the frame structure formed by the ceramic outer frame 221 and the inner frame 222 is connected to an outer edge of the metal middle plate 21 to form the middle frame 20. For example, the outer edge of the metal middle plate 21 and the frame structure formed by the ceramic outer frame 221 and the inner frame 222 may be fastened together through clamping, welding, or bonding.

In some examples, an adhesive layer may be disposed between the ceramic outer frame 221 and the inner frame 222 made of the fiber reinforced composite. In this way, after the ceramic outer frame 221 and the inner frame 222 made of the fiber reinforced composite are press-fitted, the ceramic outer frame 221 and the inner frame 222 made of the fiber reinforced composite are tightly bonded by using the adhesive layer.

In a possible implementation, an outward-facing side of the ceramic outer frame 221 of the electronic device may be a vertical plane. For example, the outward-facing side of the ceramic outer frame 221 may be perpendicular to the display screen 10. Alternatively, an outward-facing side of the ceramic outer frame 221 of the electronic device may be an outwardly bulged arc surface. In this way, it is convenient for the user to hold the ceramic outer frame 221 of the electronic device, the ceramic outer frame 221 takes on nicer appearance, and a weight of the ceramic outer frame 221 is lighter with the thickness unchanged.

In this embodiment of this application, the middle frame 20 of the electronic device may be fabricated by using the following steps.

Step (A): Provide the metal middle plate 21, the ceramic outer frame 221, and the inner frame 222 made of the fiber reinforced composite.

The metal middle plate 21 may be an aluminum plate or an aluminum alloy plate, or the metal middle plate 21 may be a stainless steel plate. The ceramic outer frame 221 may be a seamless ceramic frame. For example, the ceramic outer frame 221 is of a continuous ring structure. This ensures that no gap exists on the ceramic outer frame 221, ensures integrity of the ceramic outer frame 221, and makes an appearance structure of the frame 22 more beautiful. In addition, when the ceramic outer frame 221 with the continuous ring structure is used, assembly of the ceramic outer frame 221 and the inner frame 222 made of the fiber reinforced composite can be completed by performing press fitting once. Certainly, the ceramic outer frame 221 may alternatively be formed by splicing a plurality of segments of ceramic outer frames 221. The inner frame 222 may be of a continuous ring structure, or may be formed by splicing a plurality of segments of inner frames 222.

For provision of the metal middle plate 21, the metal middle plate 21 may be formed through punching or computer numerical control machine (Computer number control, CNC) processing. The opening and the battery compartment that may be used for disposing the battery 40 are formed on the metal middle plate 21, and a notch structure or an engaging structure is provided at the outer edge of the metal middle plate 21.

For provision of the ceramic outer frame 221, the ceramic outer frame 221 may be obtained by performing rough machining and surface treatment on a ceramic green body. During rough machining performed on the ceramic green body, for example, cavity edge and bottom residues of the ceramic green body may be removed in a CNC or laser processing manner, and a frame body may be trimmed. Surface treatment is performed after rough machining. For example, two sides of the frame body may be smoothed to a required thickness by using a grinding device.

For provision of the inner frame 222 made of the fiber reinforced composite, for example, the fiber reinforced composite may be made into a plate, and rough machining and surface treatment may be performed on the fiber reinforced composite plate to obtain the inner frame 222. During rough machining performed on the fiber reinforced composite plate, for example, cavity edge and bottom residues of the fiber reinforced composite plate may be removed in a CNC or laser processing manner, and a frame body may be trimmed.

Step (B): Dispose the adhesive layer between the ceramic outer frame 221 and the inner frame 222 made of the fiber reinforced composite.

When the adhesive layer is disposed, the adhesive layer may be disposed on an inner side face of the ceramic outer frame 221 (that is, a side that is of the ceramic outer frame 221 and that faces the inner frame 222), or the adhesive layer may be disposed on the outer side face of the inner frame 222 (that is, a side that is of the inner frame 222 and that faces the ceramic outer frame 221). The adhesive layer may be a resin glue, and a thickness of the adhesive layer may be set depending on an actual requirement. The ceramic outer frame 221 and the inner frame 222 may be pre-fastened together by using the adhesive layer before press fitting. In addition, the adhesive layer enables the ceramic outer frame 221 and the inner frame 222 to be tightly bonded after the press fitting.

Step (C): Perform press fitting processing on the ceramic outer frame 221, the adhesive layer, and the inner frame 222 to form the frame 22.

For press fitting between the inner frame 222 and the ceramic outer frame 221, for example, a high-temperature hot pressing manner may be used for press fitting. During hot pressing, the inner frame 222 made of the fiber reinforced composite and the ceramic outer frame 221 are tightly bonded, and the inner frame 222 and the ceramic outer frame 221 form the frame 22 including ceramics and the fiber reinforced composite. Because the inner frame 222 made of the fiber reinforced composite is included, the inner frame 222 can provide strength support. In this way, the thickness of the ceramic outer frame 221 can be reduced, so that the weight of the composite frame 22 including the inner frame 222 and the ceramic outer frame 221 is greatly reduced, compared with an all-ceramic frame that has a same thickness as the frame 22, thereby reducing the weight of the formed middle frame 20. When the middle frame 20 is applied to the electronic device, the weight of the electronic device is reduced.

Step (D): Connect the frame 22 and the outer edge of the metal middle plate 21 to form the middle frame 20.

For a connection between the frame 22 and the outer edge of the metal middle plate 21, for example, the frame 22 and the outer edge of the metal middle plate 21 may be fixedly connected through clamping, welding, or bonding. For a connection between the outer edge of the metal middle plate 21 and the frame 22, for example, the outer edge of the metal middle plate 21 and an inner side face of the inner frame 222 in the frame 22 may be connected.

In this embodiment of this application, to increase binding force between the ceramic outer frame 221 and the inner frame 222, before the ceramic outer frame 221 and the inner frame 222 are press-fitted, the method further includes: performing roughening processing on the inner side wall of the ceramic outer frame 221 and/or an outer side wall of the inner frame 222. For example, the ceramic outer frame 221 may be positioned on a fixture by using a positioning pin, and after a cylinder is tightened, the inner side wall of the ceramic outer frame 221 is automatically processed by using a probe tool, to form a concave-convex structure. In this way, when the adhesive layer is disposed on the inner side face of the ceramic outer frame 221 or the outer side wall of the inner frame 222, a contact area between the ceramic outer frame 221 and the inner frame 222 is increased by using the adhesive layer, and the binding force between the inner frame 222 and the ceramic outer frame 221 is increased after the press fitting.

In a possible implementation, before the ceramic outer frame 221 and the inner frame 222 made of the fiber reinforced composite are press-fitted, the method further includes: disposing at least one antenna radiator on the inner side face of the ceramic outer frame 221. In this way, during injection molding, the antenna radiator is press-fitted between the ceramic outer frame 221 and the inner frame 222.

In this embodiment of this application, after step (D), the method further includes: performing cavity CNC finishing on the middle frame 20. For example, the middle frame 20 is wrapped in an iron cavity fixture, the middle frame 20 may be bonded and fastened by using a UV glue, the middle frame 20 is fastened by using a magnet jig, and precise positioning and processing are performed on the middle frame 20 by using a probe.

After cavity CNC finishing is performed, the method further includes: performing CNC processing on a shape of the ceramic outer frame 221. For example, the middle frame 20 obtained after the CNC finishing is positioned and fastened, and the shape of the ceramic outer frame 221 is processed. In this way, a required outline is obtained after the processing.

After CNC processing is performed on the shape of the ceramic outer frame 221, the method further includes: performing rough polishing, grinding, and side hole processing of the ceramic outer frame 221, fine polishing of the ceramic outer frame 221, and surface treatment of the ceramic outer frame 221. For example, the ceramic outer frame 221 is roughly polished first (for example, a long-side round angle and a short-side round angle are roughly polished). After rough polishing is performed, side faces of the ceramic outer frame 221 and the inner frame 222 made of the fiber reinforced composite are punctured, and hole locations are processed by using a CNC. After puncturing is performed, the ceramic outer frame 221 is finely polished (for example, 3D curved surface is finely polished). After fine polishing is performed, surface treatment is performed on the ceramic outer frame 221. For example, a surface of the ceramic outer frame 221 may be coated with a coating through vapor deposition. The coating may be an anti-fingerprint (Anti Finger, AF) film. Based on the coating, fingerprints are not easily left on the ceramic surface, and the ceramic surface has desirable abrasion resistance. Alternatively, a film layer may be deposited on a surface of the ceramic outer frame 221 through physical vapor deposition (Physical vapor deposition, PVD), so that fingerprints are not easily left on the ceramic surface, and the ceramic surface has desirable abrasion resistance.

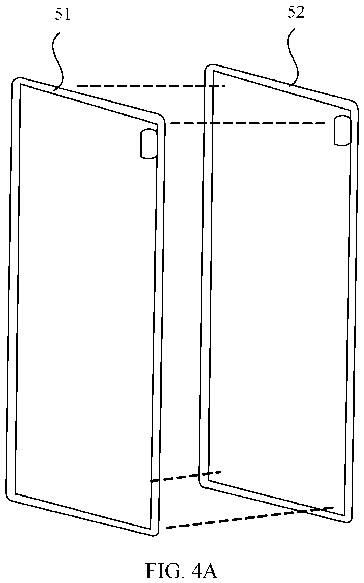

In a possible implementation, as shown in FIG. 4A, the rear cover 50 may include an inner housing 51 made of a fiber reinforced composite and a ceramic outer housing 52. The ceramic outer housing 52 and the inner housing 51 are laminated to form the rear cover 50. An outer surface of the rear cover 50 is made of ceramics and an inner surface of the rear cover 50 is made of a fiber reinforced composite. For the fiber reinforced composite, refer to the foregoing descriptions. For example, the fiber reinforced composite may be a glass fiber plate made of glass fiber and plastics, and in this case, the inner housing 51 is an inner housing made of the glass fiber plate. Alternatively, the fiber reinforced composite may be a carbon fiber plate made of carbon fiber and plastics, and in this case, the inner housing 51 is an inner housing made of the carbon fiber plate.

In this embodiment of this application, the inner housing 51 made of the fiber reinforced composite can provide strength support. In this way, a thickness of the ceramic outer housing 52 can be reduced; and in comparison with an all-ceramic rear cover, a weight of the rear cover 50 provided in this embodiment of this application can be reduced, thereby ensuring that the weight of the electronic device is reduced. During assembly of the inner housing 51 made of the fiber reinforced composite and the ceramic outer housing 52, an adhesive layer may be disposed between the inner housing 51 and the ceramic outer housing 52, and the inner housing 51 and the ceramic outer housing 52 are bonded after press fitting. The rear cover 50 including the inner housing 51 and the ceramic outer housing 52 may be connected to the frame 22 through bonding or clamping, to form an outer housing of the mobile phone. In this way, an outer surface of the outer housing of the mobile phone is made of an all-ceramic material, so that an all-ceramic outer housing is implemented on a premise of reducing the weight of the electronic device. Certainly, in some examples, the rear cover 50 may include but is not limited to the inner housing 51 made of the fiber reinforced composite and the ceramic outer housing 52.

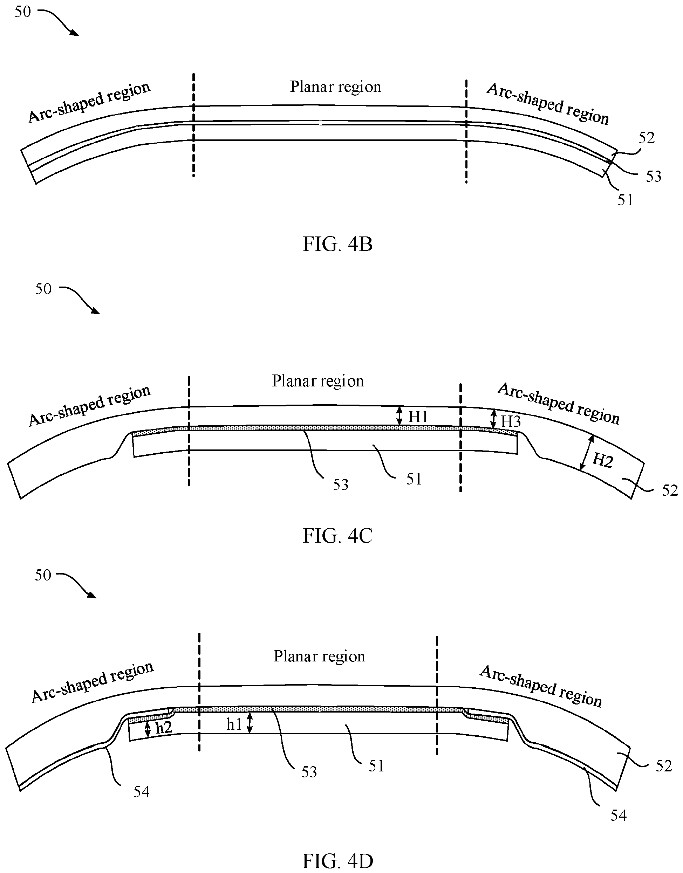

In this embodiment of this application, when the inner housing 51 and the ceramic outer housing 52 are press-fitted to form the rear cover 50, orthographic projection of the inner housing 51 toward an inner surface of the ceramic outer housing 52 partially covers the inner surface of the ceramic outer housing 52, or in an illustrative example may completely cover the inner surface of the ceramic outer housing 52. For example, as shown in FIG. 4B, the orthographic projection of the inner housing 51 toward the inner surface of the ceramic outer housing 52 completely covers the inner surface of the ceramic outer housing 52. The inner housing 51 and the ceramic outer housing 52 form, in a composite way, the rear cover 50 whose inner surface is made of the glass fiber plate or the carbon fiber plate and whose outer surface is made of ceramics. An adhesive layer 53 may be disposed between the inner housing 51 and the ceramic outer housing 52. This ensures that the inner housing 51 and the ceramic outer housing 52 are fastened more firmly. In addition, when the adhesive layer 53 is disposed between the inner housing 51 and the ceramic outer housing 52, after the inner housing 51 and the ceramic outer housing 52 are press-fitted, the inner housing 51 and the ceramic outer housing 52 are sealed and connected by using the adhesive layer. In this way, vapor does not easily enter a location between the inner housing 51 and the ceramic outer housing 52, thereby avoiding a problem of delamination between the inner housing 51 and the ceramic outer housing 52 caused because vapor enters the location between the inner housing 51 and the ceramic outer housing 52.

In another implementation, the inner housing 51 is made of the fiber reinforced composite such as the glass fiber plate or the carbon fiber plate, but usually these materials are not easily bent or are easily at a risk of fracture in a bending process. However, due to a design requirement of the rear cover 50, there are usually arc-shaped regions on the rear cover 50. Usually, arc-shaped regions of the ceramic outer housing 52 have been formed before press fitting, and an arc-shaped region of the inner housing 51 in the rear cover 50 is formed in a process of press fitting performed on the fiber reinforced composite such as the glass fiber plate or the carbon fiber plate and the ceramic outer housing 52. The fiber reinforced composite such as the glass fiber plate or the carbon fiber plate is easily fractured in the process of press fitting performed on the fiber reinforced composite and the ceramic outer housing 52. To reduce a probability that a crack appears in the material of the inner housing 51 during press fitting performed on the material of the inner housing 51 and the ceramic outer housing 51, in this embodiment of this application, the inner housing 51 partially covers the inner surface of the ceramic outer housing 52. According to the present invention and as shown in FIG. 4C, the ceramic outer housing 52 has a planar region and the arc-shaped regions located at an outer edge of the planar region, and a thickness of the planar region of the ceramic outer housing 52 is not equal to a thickness of a part of the arc-shaped region of the ceramic outer housing 52A thickness H2 of a part of the arc-shaped region of the ceramic outer housing 52 is greater than the thickness H1 of the planar region of the ceramic outer housing 52, and a thickness H3 of a part of the arc-shaped region of the ceramic outer housing 52 is equal to the thickness H1 of the planar region of the ceramic outer housing 52. The inner housing 51 is located in a region that is of the ceramic outer housing 52 and that has a relatively small thickness. For example, the inner housing 51 is located in the planar region of the ceramic outer housing 52 and on an inner surface of a part of the arc-shaped region of the ceramic outer housing 52. In this way, during press fitting and molding performed on the ceramic outer housing 52 and the material of the inner housing 51, a degree of bending of the material of the inner housing 51 in the arc-shaped region of the ceramic outer housing 52 is relatively low, thereby reducing a risk of fracture of the inner housing 51 while ensuring a strength of the rear cover 50.

In a possible implementation, when the inner housing 51 partially covers the inner surface of the ceramic outer housing 52, a part of the inner surface of the ceramic outer housing 52 is in an exposed state. However, due to relatively high hardness and roughness of the ceramic outer housing 52, the exposed inner surface of the ceramic outer housing 52 easily scratches a component in contact with the exposed inner surface. For example, a battery is usually installed inside the electronic device, and the battery usually comes into contact with the rear cover 50. In this case, when the electronic device is hit or collided with, the exposed inner surface of the ceramic outer housing 52 easily scratches the battery, resulting in a leakage of the battery. In view of this, to resolve this problem, in this embodiment of this application, the rear cover 50 further includes a protective film 54, where the protective film 54 is disposed on the exposed inner surface of the ceramic outer housing 52. For example, as shown in FIG. 4D, one end of the protective film 54 extends to an edge of the inner surface of the ceramic outer housing 52, the other end of the protective film 54 extends to an inner surface that is of the ceramic outer housing 52 and that is close to the planar region, and the other end of the protective film 54 and the inner housing 51 are disposed in a partially overlapping mode. Based on the protective film 54, the exposed inner surface of the ceramic outer housing 52 is shielded, and a problem that the inner surface of the ceramic outer housing 52 scratches the battery or another electronic component is avoided.

In this embodiment of this application, when the protective film 54 is disposed, as shown in FIG. 4D, one end of the protective film 54 may extend to a region in which the inner housing 51 partially overlaps the ceramic outer housing 52. In this way, a thickness h2 of a region in which the inner housing 51 overlaps the protective film 54 is less than a thickness h1 of a region in which the inner housing 51 does not overlap the protective film 54. In other words, the inner housing 51 is an inner housing with unequal thicknesses.

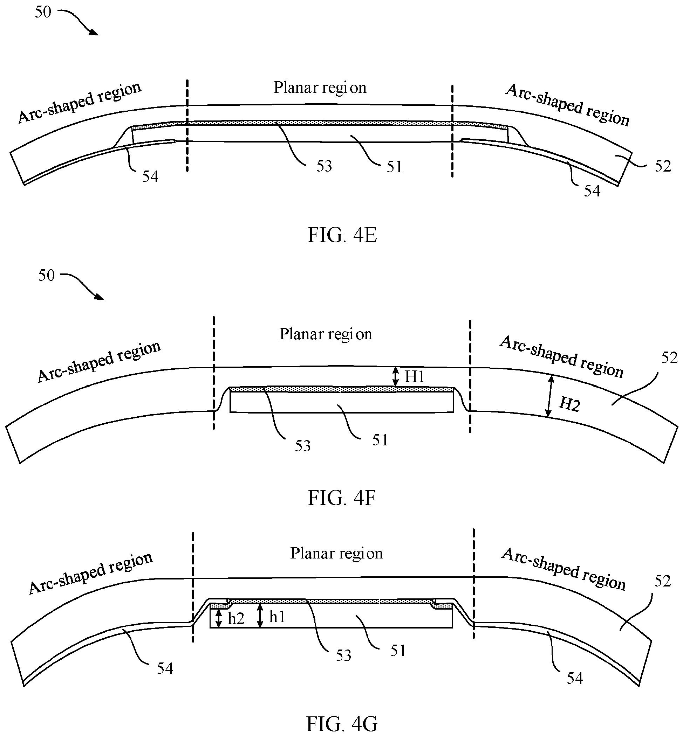

In another implementation, as shown in FIG. 4E, one end of the protective film 54 is located at an edge of an inner surface of the arc-shaped region of the ceramic outer housing 52, and the other end of the protective film 54 extends to an inner surface of the inner housing 51, so that the protective film 54 shields a location at which an outer edge of the inner housing 51 overlaps the ceramic outer housing 52. In this way, the inner surface of the rear cover 50 is smoothly transitioned, and nice appearance of the inner surface of the rear cover 50 is ensured. In addition, when the protective film 54 shields the location at which the outer edge of the inner housing 51 overlaps the ceramic outer housing 52, a foreign matter such as vapor or dust does not easily accumulate at the location at which the outer edge of the inner housing 51 overlaps the ceramic outer housing 52. Moreover, after the protective film 54 shields the outer edge of the inner housing 51, the outer edge of the inner housing 51 made of the glass fiber plate or the carbon fiber plate is not exposed. This avoids that the outer edge of the inner housing 51 made of the glass fiber plate or the carbon fiber plate scratches the battery or the electronic component, thereby ensuring that a component in the electronic device is not easily damaged during collision or installation.

In this embodiment of this application, in FIG. 4D and FIG. 4E, the region in which the protective film 54 overlaps the inner housing 51 is located in the arc-shaped region of the ceramic outer housing 52. To be specific, in the rear cover 50, a part of the arc-shaped regions of the rear cover 50 is made of a ceramic material, and a part of the arc-shaped regions of the rear cover 50 is made of two composite materials: ceramics and the glass fiber plate, or ceramics and the carbon fiber plate. This reduces the weight of the rear cover 50 on a premise of ensuring the strength of the rear cover 50, and reduces the risk of fracture of the inner housing 51.

Certainly, in some examples, the protective film 54 may alternatively not extend to the inner surface of the inner housing 51 or the region in which the inner housing 51 overlaps the ceramic outer housing 52. For example, one end of the protective film 54 extends to a location at which the end of the protective film 54 can come into contact with the outer edge of the inner housing 51.

In this embodiment of this application, the protective film 54 may be an explosion-proof film, where the explosion-proof film may be a metal film; or the protective film 54 may be an adhesive layer. When the protective film 54 is an adhesive layer, the protective film 54 can cushion the battery or the electronic component when the electronic device is hit. This avoids that the battery or the electronic component is damaged due to a collision with the rear cover 50. In addition, when the protective film 54 is an adhesive layer, the protective film 54 can have a seal effect, thereby preventing vapor from entering the location between the inner housing 51 and the ceramic outer housing 52. Moreover, the adhesive layer extends to the inner housing 51, so that the inner housing 51 and the ceramic outer housing 52 can be further fastened.

In this embodiment of this application, the protective film 54 and the ceramic outer housing 52 may be connected through bonding by using the adhesive layer, or the protective film 54 is disposed on the inner surface of the ceramic outer housing 52 through silkscreen or electroplating.

It should be noted that, when the protective film 54 is disposed on the exposed inner surface of the ceramic outer housing 52, the protective film 54 may be specifically disposed in a region in which the exposed inner surface of the ceramic outer housing 52 comes into contact with the battery or the electronic component in the electronic device. For example, when a region in which the exposed inner surface does not come into contact with the battery or the electronic component in the electronic device exists on the exposed inner surface of the ceramic outer housing 52, the protective film 54 may not be disposed on the exposed inner surface.

In this embodiment of this application, to further reduce the risk that the material of the inner housing 51 is fractured in the press fitting process, when the inner housing 51 partially covers the inner surface of the ceramic outer housing 52, the inner housing 51 needs to cover only an inner surface of the planar region of the ceramic outer housing 52. For example, as shown in FIG. 4F, the inner housing 51 may be a flat plate made by using the glass fiber plate or the carbon fiber plate, and the orthographic projection of the inner housing 51 toward the inner surface of the ceramic outer housing 52 covers the inner surface of the planar region of the ceramic outer housing 52. In this way, when the inner housing 51 and the ceramic outer housing 52 are press-fitted, bending of the material of the inner housing 51 (for example, the glass fiber plate or the carbon fiber plate) is avoided. This avoids a problem that the material of the inner housing 51 is fractured during molding of the inner housing 51 and the ceramic outer housing 52.

As shown in FIG. 4F, when the inner housing 51 covers the inner surface of the planar region of the ceramic outer housing 52, a thickness H1 of the planar region of the ceramic outer housing 52 is less than a thickness H2 of the arc-shaped region of the ceramic outer housing 52. In other words, the thicknesses of the planar region and the arc-shaped region of the ceramic outer housing 52 are set to be unequal. The inner housing 51 is located in a region that is of the ceramic outer housing 52 and that has a relatively small thickness. This ensures the strength of the rear cover 50, and reduces the weight of the rear cover 50.

As shown in FIG. 4G, when the inner housing 51 covers the inner surface of the planar region of the ceramic outer housing 52, one end of the protective film 54 is located at an outer edge of the inner surface of the ceramic outer housing 52, and the other end of the protective film 54 extends to a region in which the inner housing 51 partially overlaps the planar region of the ceramic outer housing 52. A thickness h2 of a region in which the inner housing 51 overlaps the protective film 54 is less than a thickness h1 of the other regions of the inner housing 51. In other words, the inner housing 51 is an inner housing with unequal thicknesses.

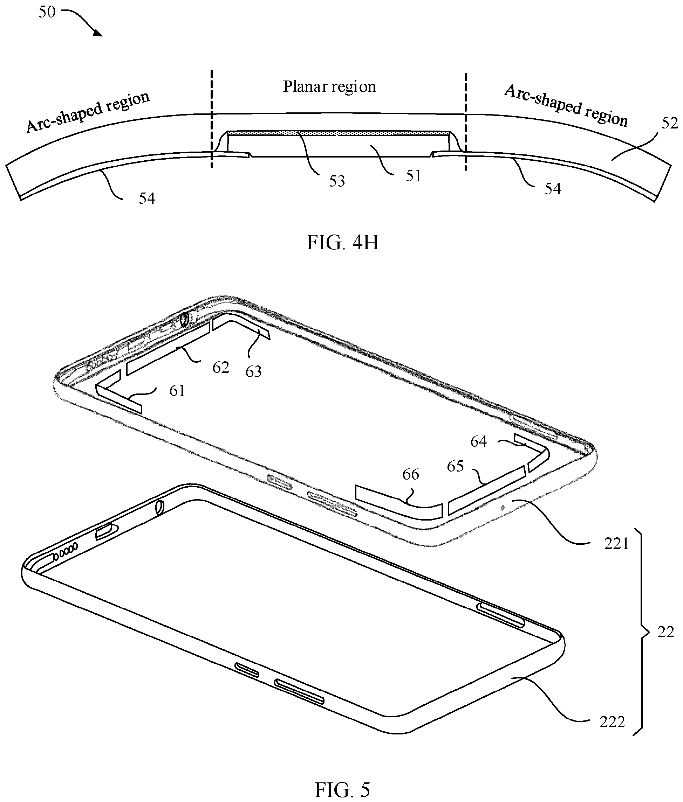

Alternatively, as shown in FIG. 4H, one end of the protective film 54 is located an outer edge of the inner surface of the ceramic outer housing 52, and the other end of the protective film 54 extends to a part of an inner surface of the inner housing 51.

In FIG. 4G and FIG. 4H, the region in which the protective film 54 overlaps the inner housing 51 is located in the planar region of the ceramic outer housing 52. To be specific, in the rear cover 50, the planar region of the rear cover 50 is made of composite materials: ceramics and the glass fiber plate, or ceramics and the carbon fiber plate, and the arc-shaped regions of the rear cover 50 are made of ceramic materials. In this way, the inner housing 51 made of ceramics and the glass fiber plate or the carbon fiber plate is easily press-fitted, and fracture of the inner housing 51 made of the glass fiber plate or the carbon fiber plate in the press fitting process is avoided. In addition, for the rear cover 50 made of the composite materials, the weight of the rear cover 50 is reduced, and the strength of the rear cover 50 is ensured.

It should be noted that, when the inner housing 51 covers the inner surface of the planar region of the ceramic outer housing 52, the inner housing 51 may completely cover the inner surface of the planar region of the ceramic outer housing 52, or the inner housing 51 may partially cover the inner surface of the planar region of the ceramic outer housing 52 on a premise that the weight and the strength of the rear cover 50 satisfy a requirement.

### Scenario 2

In this embodiment of this application, to implement signal transmitting and receiving, at least one antenna is disposed in the electronic device. The antenna includes an antenna radiator and a feed point and a ground point that are electrically connected to the antenna radiator. In this embodiment of this application, as shown in FIG. 5, an antenna radiator may be disposed between the ceramic outer frame 221 and the inner frame 222 made of the fiber reinforced composite. For example, a plurality of antenna radiators may be disposed with intervals on a side wall that is of the ceramic outer frame 221 and that faces the inner frame 222. The plurality of antenna radiators may include a first antenna radiator 61, a second antenna radiator 62, a third antenna radiator 63, a fourth antenna radiator 64, a fifth antenna radiator 65, and a sixth antenna radiator 66. Alternatively, in this embodiment of this application, antenna radiators may be disposed on a side wall that is of the inner frame 222 made of the fiber reinforced composite and that faces the ceramic outer frame 221. Alternatively, antenna radiators may be disposed on a side wall that is of the inner frame 222 and that faces away from the ceramic outer frame 221.

The antenna radiators may be disposed between the ceramic outer frame 221 and the inner frame 222 made of the fiber reinforced composite in a plurality of manners. In a possible implementation, the antenna radiators may be formed on the inner side wall of the ceramic outer frame 221 through electroplating or laser engraving. In another possible implementation, silver paste may be transfer printed to the inner side wall of the ceramic outer frame 221 in a transfer printing manner to form the antenna radiators. During injection molding of the ceramic outer frame 221 and the metal middle plate 21, the ceramic outer frame 221 on which the antenna radiators are disposed and the metal middle plate 21 are connected into one part through injection molding. The antenna radiators are injection molded between the ceramic outer frame 221 and the inner frame 222. In this embodiment of this application, materials of the antenna radiators include but are not limited to silver, gold, nickel, stainless steel, or graphite.

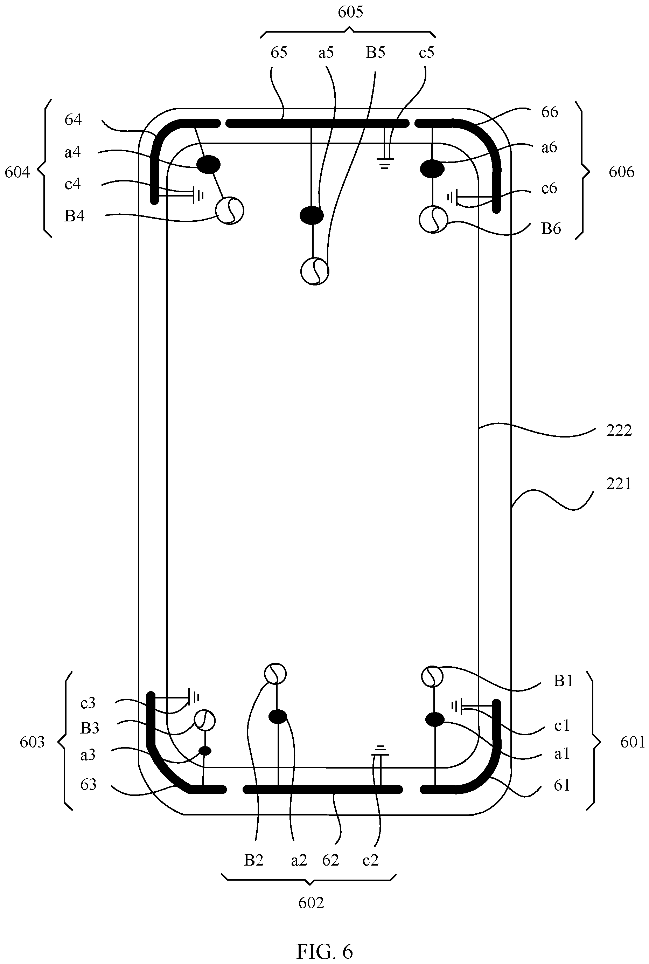

For example, as shown in FIG. 6, six antennas are disposed in the electronic device: a first antenna 601, a second antenna 602, a third antenna 603, a fourth antenna 604, a fifth antenna 605, and a sixth antenna 606. The first antenna 601 may include the first antenna radiator 61, a first feed point a1, a first ground point c1, and a first feed B1. The second antenna 602 may include the second antenna radiator 62, a second feed point a2, a second ground point c2, and a second feed B2. The third antenna 603 may include the third antenna radiator 63, a third feed point a3, a third ground point c3, and a third feed B3. The fourth antenna 604 may include the fourth antenna radiator 64, a fourth feed point a4, a fourth ground point c4, and a fourth feed B4. The fifth antenna 605 may include the fifth antenna radiator 65, a fifth feed point a5, a fifth ground point c5, and a fifth feed B5. The sixth antenna 606 may include the sixth antenna radiator 66, a sixth feed point a6, a sixth ground point c6, and a sixth feed B6. Each feed may feed a high frequency current into a corresponding antenna radiator by using a corresponding feed point, and the high frequency current is transmitted outward on the antenna radiator in an electromagnetic wave manner. It should be noted that specified locations of the first antenna 601, the second antenna 602, the third antenna 603, the fourth antenna 604, the fifth antenna 605, and the sixth antenna 606 include but are not limited to specified locations shown in FIG. 6. The specified locations of the first antenna 601, the second antenna 602, the third antenna 603, the fourth antenna 604, the fifth antenna 605, and the sixth antenna 606 may be adjusted depending on an actual requirement.

Each feed point and each feed may be located on the circuit board 30, each feed may be electrically connected to a radio frequency chip or a main chip on the circuit board 30, each feed point is disposed close to the antenna radiator, and each feed point may be electrically connected to a corresponding feed by using a feeder. The metal middle plate 21 is electrically connected to a ground point of the circuit board 30. Therefore, in this embodiment of this application, one end of each ground point is electrically connected to the antenna radiator, and the other end of the ground point may be connected to the metal middle plate 21 to implement grounding or may be connected to the ground point of the circuit board 30 to implement grounding.

In this embodiment of this application, each feed point may be electrically connected to a corresponding antenna radiator in a contact manner. For example, a feed point structure is connected to the antenna radiator. For example, the feed point structure may be connected to the antenna radiator in a connection manner such as hot melting or welding, and the other end of the feed point structure is electrically connected to a feed point of the circuit board 30. It should be noted that a material of the feed point structure includes but is not limited to a copper sheet, an iron sheet, a nickel sheet, a screw, or a printed circuit board (Printed Circuit Board, PCB). Alternatively, the feed point is electrically connected to the antenna radiator in a non-contact manner, and the feed point and the antenna radiator are coupled for feeding the high frequency current into the antenna radiator.

It should be noted that in this embodiment of this application, the connection between each feed point and a corresponding antenna radiator includes but is not limited to the connection manner shown in FIG. 6. In other examples, a high frequency current may be fed into the first antenna radiator 61, the second antenna radiator 62, and the third antenna radiator 63 by using the second feed point a2, the first antenna radiator 61 and the third antenna radiator 63 may be used as radiators of the second antenna 602, the second antenna 602 excites the first antenna 601 and the third antenna 603 in a coupling manner, and the first antenna 601 and the third antenna 603 are used as parasitic antennas of the second antenna 602. In other examples, there may be one or more feed points included in each antenna. For example, the fifth antenna 605 may include two feed points, and the two feed points may be electrically connected to the second antenna radiator 62.

In this embodiment of this application, as shown in FIG. 6, the first antenna 601, the second antenna 602, and the third antenna 603 may be main antennas. For example, the second antenna 602 may be a low frequency (700 MHz to 960 MHz) antenna of the main antennas, and the first antenna 601 and the third antenna 603 may be medium-high frequency (1.805 GHz to 2.69 GHz) antennas of the main antennas. For example, the first antenna 601 may be a high frequency (2.3 GHz to 2.69 GHz) antenna, and the third antenna 603 may be a medium-high frequency antenna; or the first antenna 601 may be a medium frequency (1.71 GHz to 2.2 GHz) antenna, and the third antenna 603 may be a high frequency (2.3 GHz to 2.69 GHz) antenna.

It should be noted that the main antennas include but are not limited to the first antenna 601, the second antenna 602, and the third antenna 603. For example, the main antennas may alternatively include one or two of the first antenna 601, the second antenna 602, and the third antenna 603, or the main antennas may include the fourth antenna 604, the fifth antenna 605, and the sixth antenna 606. A corresponding antenna is specifically selected as the main antenna depending on an actual requirement. The first antenna 601, the second antenna 602, and the third antenna 603 may be or may not be main antennas. Frequency bands of the first antenna 601, the second antenna 602, and the third antenna 603 include but are not limited to a low frequency (700 MHz to 960 MHz), a medium frequency (1.71 GHz to 2.2 GHz), and a high frequency (2.3 GHz to 2.69 GHz). The first antenna 601, the second antenna 602, and the third antenna 603 may be single-band antennas, or may be multi-band antennas.

A low frequency band of the main antenna may include but is not limited to a B5 frequency band (824 MHz to 894 MHz), a B8 frequency band (880 MHz to 960 MHz), and a B28 frequency band (703 MHz to 803 MHz). A medium frequency band of the main antenna may include but is not limited to a B3 frequency band (1710 MHz to 1880 MHz) and a B1 frequency band (1920 MHz to 2170 MHz). A high frequency band of the main antenna may include but is not limited to a B7 frequency band (2500 MHz to 2690 MHz).

Alternatively, with development of a 5G technology, an operating frequency band of the main antenna may further cover a 5G frequency band. For example, the operating frequency band of the main antenna may further include frequency bands of a 5G system, for example, frequency bands (3300 MHz to 3600 MHz) and (4800 MHz to 5000 MHz). It should be noted that the 5G frequency band of the main antenna may include but is not limited to a frequency band above or below 6 GHz.

The fourth antenna 604 may be a Wi-Fi antenna. An operating frequency band of the Wi-Fi antenna may be (2400 MHz to 2500 MHz), an operating frequency band of the Wi-Fi antenna may be (4900 MHz to 5900 MHz), or an operating frequency band of the Wi-Fi antenna may include (2400 MHz to 2500 MHz) and (4900 MHz to 5900 MHz). Alternatively, the fourth antenna 604 may be a global positioning system (Global Positioning System, GPS) antenna. An operating frequency band of the GPS antenna may be (1575±100 MHz). Alternatively, the fourth antenna 604 may be a Bluetooth antenna. An operating frequency band of the Bluetooth antenna may be (2400 MHz to 2500 MHz). It should be noted that the fourth antenna 604 includes but is not limited to the Wi-Fi antenna or the GPS antenna, or the fourth antenna 604 may be another type of antenna. The operating frequency band of the fourth antenna 604 includes but is not limited to (2400 MHz to 2500 MHz), (4900 MHz to 5900 MHz), or (1575±100 MHz).

The fifth antenna 605 may be a diversity antenna. An operating frequency band of the diversity antenna may include but is not limited to the B5 frequency band (824 MHz to 894 MHz), the B8 frequency band (880 MHz to 960 MHz), the B28 frequency band (703 MHz to 803 MHz), the B3 frequency band (1710 MHz to 1880 MHz), the B7 frequency band (2500 MHz to 2690 MHz), and the B1 frequency band (1920 MHz to 2170 MHz). It should be noted that, with development of the 5G technology, the operating frequency band of the diversity antenna may further cover the 5G frequency band. For example, the operating frequency band of the diversity antenna may further include the frequency bands of the 5G system, for example, the frequency bands (3300 MHz to 3600 MHz) and (4800 MHz to 5000 MHz). It should be noted that the 5G frequency band of the diversity antenna may include but is not limited to a frequency band above or below 6 GHz. The fifth antenna 605 includes but is not limited to the diversity antenna, or may be another type of antenna, for example, a Wi-Fi antenna or a main antenna. The operating frequency band of the fifth antenna 605 includes but is not limited to a low, medium, or high frequency band.

The sixth antenna 606 may be a diversity multiple-input multiple-output (Multiple-Input Multiple-Output, MIMO) antenna. The diversity MIMO antenna may cover low, medium, and high frequency bands (for example, the low frequency is 700 MHz to 960 MHz, the medium frequency is 1.71 GHz to 2.2 GHz, and the high frequency is 2.3 GHz to 2.7 GHz). It should be noted that, with development of the 5G technology, an operating frequency band of the diversity MIMO antenna may further cover the 5G frequency band. For example, the operating frequency band of the diversity MIMO antenna may further include the frequency bands of the 5G system, for example, the frequency bands (3300 MHz to 3600 MHz) and (4800 MHz to 5000 MHz). It should be noted that the 5G frequency band of the diversity MIMO antenna may include but is not limited to a frequency band above or below 6 GHz. In this embodiment of this application, the sixth antenna 606 may alternatively be a Wi-Fi antenna.

It should be noted that the fourth antenna 604, the fifth antenna 605, and the sixth antenna 606 include but are not limited to the foregoing types of antennas. In actual application, locations of the Wi-Fi antenna, the diversity antenna, and the MIMO antenna may be adjusted depending on an actual requirement.

In a possible implementation, impedances of materials of the first antenna 601, the second antenna 602, the third antenna 603, the fourth antenna 604, the fifth antenna 605, and the sixth antenna 606 are not greater than 5 Ω. It should be understood that in this embodiment of this application, the impedances of the materials of the first antenna 601, the second antenna 602, the third antenna 603, the fourth antenna 604, the fifth antenna 605, and the sixth antenna 606 are specifically impedances of materials of the first antenna radiator 61, the second antenna radiator 62, the third antenna radiator 63, the fourth antenna radiator 64, the fifth antenna radiator 65, and the sixth antenna radiator 66. In this embodiment of this application, the impedances of the first antenna 601, the second antenna 602, the third antenna 603, the fourth antenna 604, the fifth antenna 605, and the sixth antenna 606 may be 1 Ω. Alternatively, the impedances of the first antenna 601, the second antenna 602, the third antenna 603, the fourth antenna 604, the fifth antenna 605, and the sixth antenna 606 may be 3 Ω. The impedances of the first antenna 601, the second antenna 602, the third antenna 603, the fourth antenna 604, the fifth antenna 605, and the sixth antenna 606 may be identical or different. The impedances of the materials of the first antenna 601, the second antenna 602, the third antenna 603, the fourth antenna 604, the fifth antenna 605, and the sixth antenna 606 are set to be within 5 Ω, so that conductivity of the first antenna radiator 61, the second antenna radiator 62, the third antenna radiator 63, the fourth antenna radiator 64, the fifth antenna radiator 65, and the sixth antenna radiator 66 are relatively high. Therefore, during radiation, antenna radiation efficiency is higher, and antenna performance is improved.

In a possible implementation, a clearance of each of the first antenna 601, the second antenna 602, the third antenna 603, the fourth antenna 604, the fifth antenna 605, and the sixth antenna 606 may be less than 10 mm. It should be understood that the clearance of each of the first antenna 601, the second antenna 602, the third antenna 603, the fourth antenna 604, the fifth antenna 605, and the sixth antenna 606 is a distance between a metal material (for example, the metal middle plate 21 or the circuit board 30) and each of the first antenna radiator 61, the second antenna radiator 62, the third antenna radiator 63, the fourth antenna radiator 64, the fifth antenna radiator 65, and the sixth antenna radiator 66. For example, the clearance of each of the first antenna 601, the second antenna 602, the third antenna 603, the fourth antenna 604, the fifth antenna 605, and the sixth antenna 606 may be 1 mm, or the clearance of each of the first antenna 601, the second antenna 602, the third antenna 603, the fourth antenna 604, the fifth antenna 605, and the sixth antenna 606 may be 5 mm.

It should be noted that, when the first antenna 601, the second antenna 602, and the third antenna 603 are used as main antennas, clearances of the first antenna 601, the second antenna 602, and the third antenna 603 may be greater than clearances of the fourth antenna 604, the fifth antenna 605, and the sixth antenna 606.

In a possible implementation, when the antenna radiators are disposed between the ceramic outer frame 221 and the inner frame 222, the ceramic outer frame 221 may be the seamless ring ceramic outer frame that encloses the outer side face of the inner frame 222 and that is shown in FIG. 5. Alternatively, the ceramic outer frame may be a plurality of ceramic segments disposed on the outer side face of the inner frame 222. For example, as shown in FIG. 7, the ceramic outer frame 221 may include a plurality of ceramic sub-frames, and the plurality of ceramic sub-frames may be spliced to form the ceramic outer frame with a ring structure. The ceramic outer frame 221 is of a discontinuous ring structure.

For example, as shown in FIG. 7, the ceramic outer frame 221 may include eight ceramic sub-frames: a first ceramic sub-frame 2211, a second ceramic sub-frame 2212, a third ceramic sub-frame 2213, a fourth ceramic sub-frame 2214, a fifth ceramic sub-frame 2215, a sixth ceramic sub-frame 2216, a seventh ceramic sub-frame 2217, and an eighth ceramic sub-frame 2218. The eight ceramic sub-frames 22 are successively connected to form the ceramic outer frame 221. It should be noted that the ceramic sub-frames 22 in the ceramic outer frame 221 include but are not limited to eight ceramic sub-frames, and a quantity of ceramic sub-frames 22 may be set depending on an actual requirement.

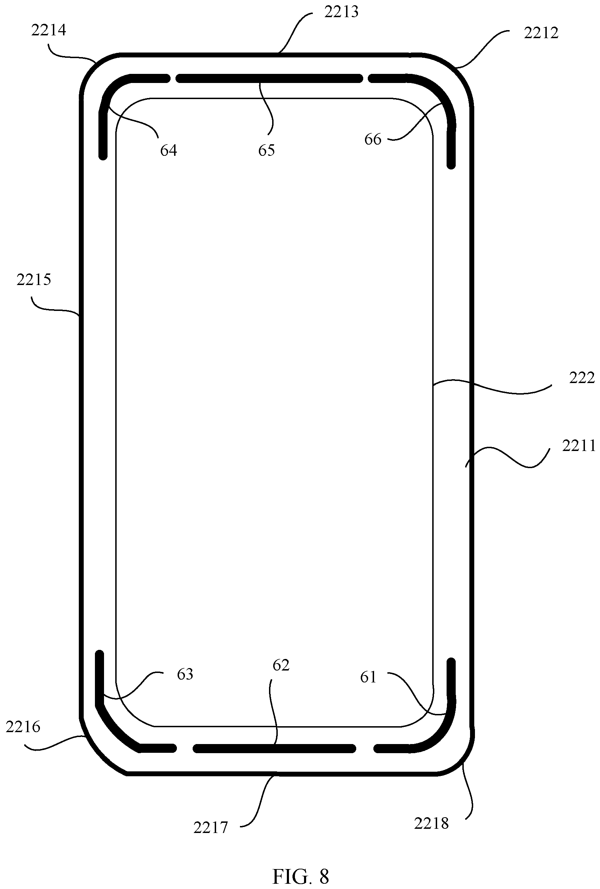

For example, as shown in FIG. 8, the eight ceramic sub-frames 22 are successively connected and disposed on an outer surface of the inner frame 222, and the first antenna radiator 61, the second antenna radiator 62, the third antenna radiator 63, the fourth antenna radiator 64, the fifth antenna radiator 65, and the sixth antenna radiator 66 may be located between the inner frame 222 and the eight ceramic sub-frames. During fabrication, each antenna radiator may be disposed on the ceramic sub-frames. Press fitting processing is performed on each ceramic sub-frame and the inner frame 222 to bond the ceramic sub-frame 22 to the inner frame 222, so that each antenna radiator is fastened between the inner frame 222 and the ceramic sub-frame.

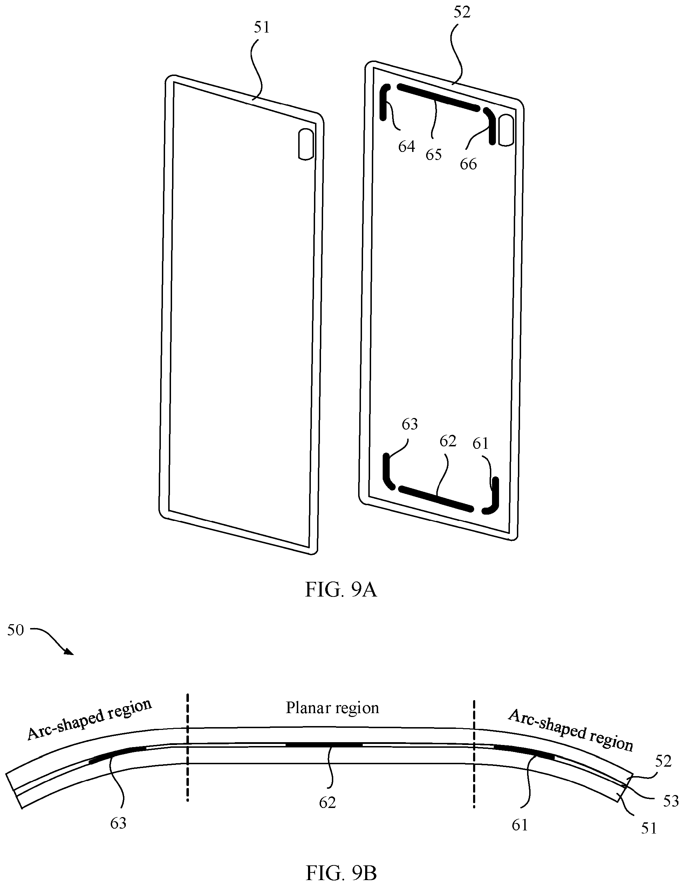

In a possible implementation, in this embodiment of this application, when the rear cover 50 includes the inner housing 51 made of the fiber reinforced composite and the ceramic outer housing 52, the plurality of antennas may alternatively be located on the inner housing 51 made of the fiber reinforced composite and the ceramic outer housing 52. For example, as shown in FIG. 9A, the first antenna radiator 61, the second antenna radiator 62, the third antenna radiator 63, the fourth antenna radiator 64, the fifth antenna radiator 65, and the sixth antenna radiator 66 may be disposed on a side that is of the ceramic outer housing 52 and that faces the inner housing 51 (that is, the inner surface of the ceramic outer housing 52). Alternatively, the first antenna radiator 61, the second antenna radiator 62, the third antenna radiator 63, the fourth antenna radiator 64, the fifth antenna radiator 65, and the sixth antenna radiator 66 may be disposed on a side that is of the inner housing 51 and that faces the ceramic outer housing 52 (that is, an outer surface of the inner housing 51). In this way, after the inner housing 51 made of the fiber reinforced composite and the ceramic outer housing 52 are press-fitted, the first antenna radiator 61, the second antenna radiator 62, the third antenna radiator 63, the fourth antenna radiator 64, the fifth antenna radiator 65, and the sixth antenna radiator 66 are press-fitted between the inner housing 51 and the ceramic outer housing 52.

It should be noted that, when the inner housing 51 completely covers the inner surface of the ceramic outer housing 52, as shown in FIG. 9B, the first antenna radiator 61, the second antenna radiator 62, and the third antenna radiator 63 are located between the ceramic outer housing 52 and the inner housing 51. The first antenna radiator 61 and the third antenna radiator 63 may be located between the arc-shaped region of the ceramic outer housing 52 and the arc-shaped region of the inner housing 51, and the second antenna radiator 62 is located between the planar region of the ceramic outer housing 52 and a planar region of the inner housing 51. Certainly, in some examples, all of the first antenna radiator 61, the second antenna radiator 62, and the third antenna radiator 63 may be located in the planar region of the ceramic outer housing 52 and the planar region of the inner housing 51, or may be located between the arc-shaped region of the ceramic outer housing 52 and the arc-shaped region of the inner housing 51.

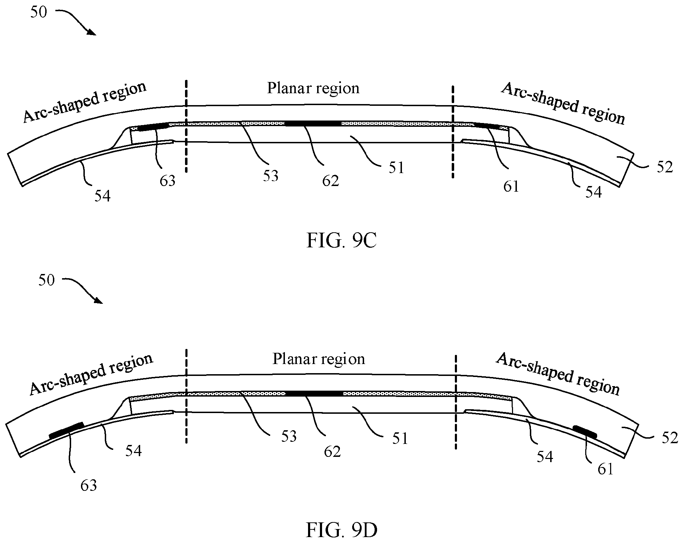

Alternatively, when the inner housing 51 partially covers the inner surface of the ceramic outer housing 52, for example, as shown in FIG. 9C, when the inner housing 51 partially covers the inner surface of the arc-shaped region of the ceramic outer housing 52, the second antenna radiator 62 may be located between the planar region of the ceramic outer housing 52 and the inner housing 51, and the first antenna radiator 61 and the third antenna radiator 63 may be located between the arc-shaped region of the ceramic outer housing 52 and the inner housing 51.

Alternatively, as shown in FIG. 9D, the second antenna radiator 62 may be located between the planar region of the ceramic outer housing 52 and the inner housing 51, and the first antenna radiator 61 and the third antenna radiator 63 may be located between the ceramic outer housing 52 and the protective film 54.

Alternatively, when the inner housing 51 covers only the inner surface of the planar region of the ceramic outer housing 52 (referring to FIG. 4H), the second antenna radiator 62 may be located between the planar region of the ceramic outer housing 52 and the inner housing 51, and the first antenna radiator 61 and the third antenna radiator 63 may be located between the ceramic outer housing 52 and the protective film 54.

It should be noted that, when the first antenna radiator 61, the second antenna radiator 62, the third antenna radiator 63, the fourth antenna radiator 64, the fifth antenna radiator 65, and the sixth antenna radiator 66 are disposed between the inner housing 51 and the ceramic outer housing 52, the first antenna radiator 61, the second antenna radiator 62, the third antenna radiator 63, the fourth antenna radiator 64, the fifth antenna radiator 65, and the sixth antenna radiator 66 may be disposed close to an outer edge of the ceramic outer housing 52 or the outer edge of the inner housing 51.

When the first antenna radiator 61, the second antenna radiator 62, the third antenna radiator 63, the fourth antenna radiator 64, the fifth antenna radiator 65, and the sixth antenna radiator 66 are disposed between the inner housing 51 and the ceramic outer housing 52, for the feed points and the ground points that are electrically connected respectively to the first antenna radiator 61, the second antenna radiator 62, the third antenna radiator 63, the fourth antenna radiator 64, the fifth antenna radiator 65, and the sixth antenna radiator 66, reference may be made to the foregoing descriptions. Details are not described in this embodiment of this application again.

In some examples, some antenna radiators may be disposed between the ceramic outer frame 221 and the inner frame 222 made of the fiber reinforced composite, some antenna radiators may be disposed between the inner housing 51 made of the fiber reinforced composite and the ceramic outer housing 52. Alternatively, in other examples, the antenna radiators may be disposed at corner locations of inner surfaces that are of the ceramic outer frame 221 and the ceramic outer housing 52. Alternatively, the antenna radiators may be disposed at corner locations of the outer surfaces that are of the inner frame 222 and the inner housing 51.

Alternatively, in other examples, when the rear cover 50 is a glass rear cover, and the antenna radiators may be disposed on a side that is of the rear cover 50 and that faces an interior of the mobile phone 100. For example, radiators of a plurality of antennas may be disposed on the inner surface of the rear cover 50 and close to an outer edge of the inner surface of the rear cover 50. Alternatively, some radiators of one antenna may be located between the ceramic outer frame 221 and the inner frame 222 made of the fiber reinforced composite, and the other radiators of the antenna may extend to the inner surface of the rear cover 50. In this embodiment of this application, specified locations of the antenna radiators on the frame 22 and the rear cover 50 include but are not limited to the foregoing locations.

### Scenario 3

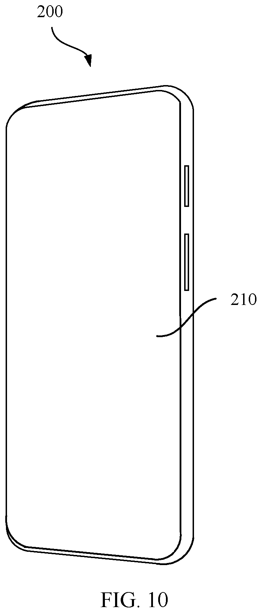

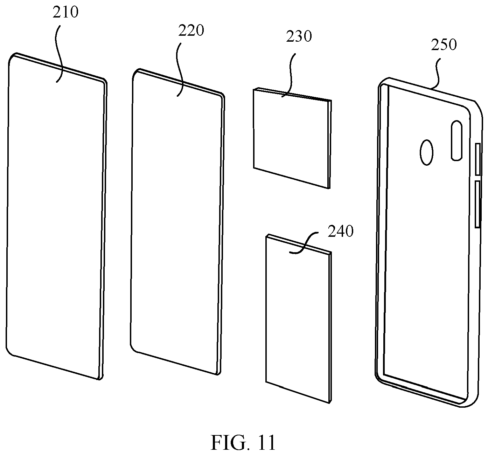

In this embodiment of this application, referring to FIG. 10 and FIG. 11, a mobile phone 200 may include a display screen 210 and a rear cover 250, and a middle plate 220, a circuit board 230, and a battery 240 may be disposed between the display screen 210 and the rear cover 250. The circuit board 230 and the battery 240 may be disposed in space enclosed by the rear cover 250 and the middle plate 220. In this embodiment of this application, a periphery of the middle plate 220 may be connected to the rear cover 250. Alternatively, in other examples, the mobile phone 200 may further include a front cover (not shown). The front cover may be located between the display screen 210 and the middle plate 220, and the middle plate 220 may be connected to the front cover to form an overall structure. During installation, the structure formed by the middle plate 220 and the front cover is assembled with the rear cover 250. The middle plate 220 may be a metal plate, for example, an aluminum plate or an aluminum alloy plate.

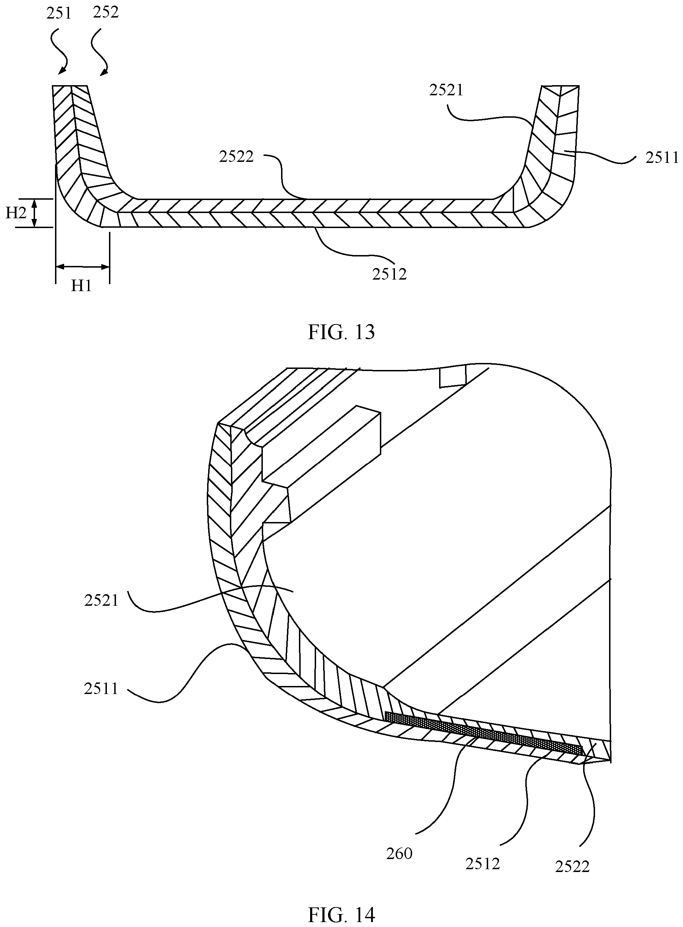

In this embodiment of this application, the rear cover 250 is a battery cover or a back cover of the electronic device. A difference between the rear cover 250 and the rear cover 50 in the scenario 1 lies in: In this embodiment of this application, the rear cover 250 includes a side frame (referring to an inner side housing 2521 and an outer side housing 2511 in FIG. 13), and the rear cover 250 and the display screen 210 form a cavity that may be used for disposing the battery 240 and the circuit board 230.

In this embodiment of this application, the battery 240 may be connected to the circuit board 230 through a power management module and a charging management module. The power management module receives an input of the battery 240 and/or the charging management module, and supplies power to a processor, an internal memory, an external memory, the display screen 210, a camera, a communications module, and the like. The power management module may further be configured to monitor parameters such as a capacity of the battery 240, a quantity of cycles of the battery 240, and a health status (an electric leakage and an impedance) of the battery 240. In some other embodiments, the power management module may alternatively be disposed in the processor of the circuit board 230. In still some other embodiments, the power management module and the charging management module may alternatively be packaged in a same component.

The display screen 210 may be an organic light-emitting diode (Organic Light-Emitting Diode, OLED) display 210, or may be a liquid crystal display (Liquid Crystal Display, LCD) 210. It should be understood that the display screen 210 may include a display and a touch component. The display is configured to output display content to a user, and the touch component is configured to receive a touch event entered by the user on the display screen 210.

It can be understood that the structure illustrated in this embodiment of this application does not constitute any specific limitation on the mobile phone 200. In some other embodiments of this application, the mobile phone 200 may include more or fewer components than those shown in the figure, a combination of some components, splitting of some components, or a different arrangement of the components. For example, the mobile phone 200 may further include components such as cameras (for example, a front-facing camera and a rear-facing camera) and a flash.

The rear cover 250 may usually be a metal battery cover, a glass battery cover, a plastic battery cover, or an all-ceramic battery cover. However, when the rear cover 250 is a metal battery cover, the metal battery cover shields an antenna in the electronic device. Therefore, the metal battery cover usually needs to be slit or use a three-segment structure design (for example, a middle part of the battery cover is made of metal, and top and bottom ends of the battery cover are made of plastic materials). As a result, the metal battery cover is not of a complete structure. When a glass battery cover is used, the electronic device is easily cracked after the electronic device falls; consequently, maintenance costs are relatively high. When a plastic battery cover is used, a texture of the outer housing of the electronic device cannot satisfy a user requirement. When a ceramic battery cover is used, a weight of the ceramic battery cover is greater than a weight of a glass battery cover that has a same thickness as the ceramic battery cover; consequently, the electronic device is relatively heavy. When the thickness of the ceramic battery cover is reduced, a strength of the ceramic battery cover cannot satisfy a requirement. In addition, when the ceramic battery cover is used, a complex inner structure design is not easily made on the ceramic battery cover because of relatively high hardness of ceramics.

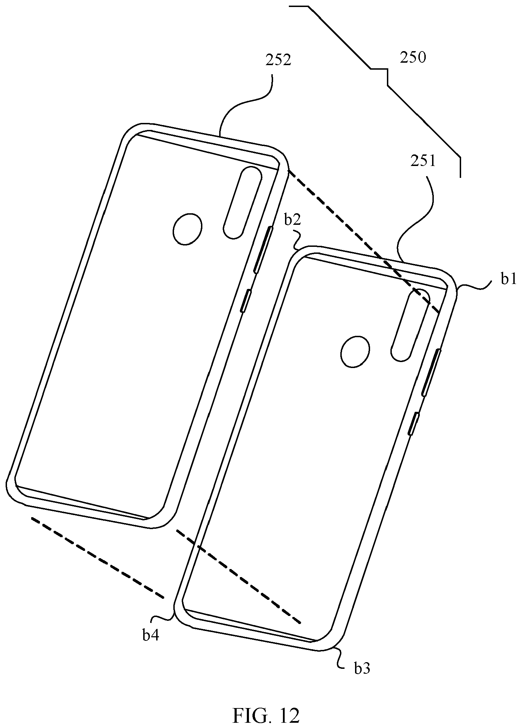

In this embodiment of this application, as shown in FIG. 12, the rear cover 250 may include a ceramic outer housing 251 and an inner housing 252 made of a fiber reinforced composite. The inner housing 252 made of the fiber reinforced composite covers on an inner surface of the ceramic outer housing 251 (that is, a side that is of the ceramic outer housing 251 and that faces an interior of the mobile phone). The ceramic outer housing 251 and the inner housing 252 are laminated to form the rear cover 250 with a double-layer structure made of ceramics and the fiber reinforced composite. In this embodiment of this application, the ceramic outer housing 251 may be located on an outer surface of the mobile phone 200, and the inner housing 252 is located on the inner surface of the ceramic outer housing 251.

In this embodiment of this application, the fiber reinforced composite may be, for example, a composite plate formed by performing a molding process on a matrix material (Matrix) and reinforcing fiber (that is, reinforcement (Reinforcement)).

The reinforcing fiber may include but is not limited to glass fiber, carbon fiber, boron nitride fiber, silicon carbide fiber, alumina fiber, boron fiber, zirconia fiber, aramid fiber, or ultra-high-molecular-weight polyethylene fiber. The reinforcing fiber may be short fiber whose length is 0.1 mm to 2 mm, or the reinforcing fiber may be long fiber whose length is greater than 2 mm. The matrix material may be a plastic matrix. For example, the fiber reinforced composite may be a glass fiber plate made of glass fiber (for example, long fiber) and a plastic material (for example, plastics), or the fiber reinforced composite may be a carbon fiber plate made of carbon fiber and a plastic material. In this case, the inner housing 252 may be an inner housing made of a glass fiber plate or a carbon fiber plate.

In this embodiment of this application, the rear cover 250 includes the ceramic outer housing 251 and the inner housing 252 made of the fiber reinforced composite. Because the inner housing 252 made of the fiber reinforced composite contains the reinforcing fiber, the inner housing 252 made of the fiber reinforced composite has a relatively high strength and specific toughness, so that the inner housing 252 made of the fiber reinforced composite can provide strength support. In this way, a thickness of the ceramic outer housing 251 can be reduced; and in comparison with an all-ceramic rear cover, a weight of the rear cover 250 in this embodiment of this application including the ceramic outer housing 251 and the inner housing 252 made of the fiber reinforced composite can be greatly reduced, and a strength requirement of the rear cover 250 can be satisfied.

In addition, an inner surface of the rear cover 250 is the inner housing 252 made of the fiber reinforced composite, and the fiber reinforced composite has specific toughness. In this way, a complex inner structure design can easily be made on the inner housing 252. This avoids a problem of a relatively great difficulty in making the inner structure design on the ceramic outer housing 251 that has relatively high hardness. Moreover, the inner housing 252 and the ceramic outer housing 251 are not easily cracked during press fitting and fastening.

In the electronic device provided in this embodiment of this application, the rear cover 250 includes the ceramic outer housing 251 and the inner housing 252 made of the fiber reinforced composite. In this way, the weight of the rear cover 250 is reduced, so that the weight of the electronic device is reduced. In addition, the complex inner structure design is easily made on the inner housing 252 made of the fiber reinforced composite. This avoids the problem of a relatively great difficulty in making the inner structure design on the ceramic outer housing 251 that has relatively high hardness.

In a possible implementation, as shown in FIG. 12, the ceramic outer housing 251 has four corners: a corner b1, a corner b2, a corner b3, and a corner b4. To ensure that the four corners are not easily damaged after the mobile phone falls, a side wall thickness of the ceramic outer housing 251 at the four corners may be made greater than a side wall thickness of the ceramic outer housing 251 at a non-corner. In this way, it can be ensured that a strength of the electronic device at the corners is relatively high, and the four corners of the electronic device are not easily damaged after the electronic device falls. It should be noted that in this embodiment of this application, a side wall thickness of the inner housing 252 at four corners may be made greater than a side wall thickness of the inner housing 252 in other parts. In this way, a side wall thickness of the rear cover 250, which includes the ceramic outer housing 251 and the ceramic inner housing 252, at four corners is greater than a side wall thickness of the rear cover 250 at a non-corner. After the electronic device falls, the four corners of the rear cover 250 are not easily cracked.

In a possible implementation, the inner housing 252 made of the fiber reinforced composite and the ceramic outer housing 251 may be bonded through bonding or press fitting. For example, an adhesive layer may be disposed between the inner housing 252 made of the fiber reinforced composite and the ceramic outer housing 251, and the inner housing 252 and the ceramic outer housing 251 are press-fitted to form the rear cover 250. In this way, the ceramic outer housing 251 and the inner housing 252 are connected, and in the rear cover 250 with the double-layer structure, the thickness of the ceramic outer housing 251 can be reduced.

In this embodiment of this application, when the ceramic outer housing 251 and the inner housing 252 form the rear cover 250, the inner housing 252 may completely cover the inner surface of the ceramic outer housing 251, or the inner housing 252 partially covers the inner surface of the ceramic outer housing 251. In this embodiment of this application, an example is used for detailed description in which the inner housing 252 may completely cover the inner surface of the ceramic outer housing 251. For example, as shown in FIG. 13, orthographic projection of the inner housing 252 toward the inner surface of the ceramic outer housing 251 completely covers the inner surface of the ceramic outer housing 251. Referring to FIG. 13, the ceramic outer housing 251 may include an outer bottom housing 2512 and an outer side housing 2511, where the outer side housing 2511 is disposed around a periphery of the outer bottom housing 2512, and the outer side housing 2511 and the outer bottom housing 2512 form a groove with a U-shaped cross-section. The outer side housing 2511 and the outer bottom housing 2512 may be integrated into one part.

Referring to FIG. 13, the inner housing 252 made of the fiber reinforced composite may include an inner bottom housing 2522 and an inner side housing 2521, where the inner side housing 2521 is disposed around a periphery of the inner bottom housing 2522, and the inner side housing 2521 and the inner bottom housing 2522 form a groove with a U-shaped cross-section. During assembly, the outer side housing 2511 and the inner side housing 2521 are laminated to form the side frame of the rear cover 250, the outer bottom housing 2512 and the inner bottom housing 2522 are laminated to form a bottom housing of the rear cover 250 (for example, a bottom face of the rear cover 250), a cross-section of the rear cover 250 is of a U-shaped structure, and the circuit board 230, the battery 240, or another component may be disposed in the U-shaped structure of the rear cover 250.

In a possible implementation, the outer bottom housing 2512 and the outer side housing 2511 in the ceramic outer housing 251 may be connected through welding or clamping, or by using a fastener, or the outer bottom housing 2512 and the outer side housing 2511 are integrated into one part. The inner bottom housing 2522 and the inner side housing 2521 in the inner housing 252 may be connected through welding or clamping, or by using a fastener, or the inner bottom housing 2522 and the inner side housing 2521 are integrated into one part.

In a possible implementation, a thickness sum H2 of the outer bottom housing 2512 of the ceramic outer housing 251 and the inner bottom housing 2522 of the inner housing 252 may be 0.25 mm to 1.6 mm. For example, the thickness sum H2 of the outer bottom housing 2512 and the inner bottom housing 2522 may be 0.45 mm, or the thickness sum H2 of the outer bottom housing 2512 and the inner bottom housing 2522 may be 1.0 mm. A thickness sum H1 of the outer side housing 2511 of the ceramic outer housing 251 and the inner side housing 2521 of the inner housing 252 may be 0.25 mm to 1.6 mm. For example, the thickness sum H1 of the outer side housing 2511 and the inner side housing 2521 may be 0.6 mm, or the thickness sum H1 of the outer side housing 2511 and the inner side housing 2521 may be 1.1 mm.

In a possible implementation, a wall thickness of the outer bottom housing 2512 of the ceramic outer housing 251 may be 0.15 mm to 0.6 mm, and a wall thickness of the inner bottom housing 2522 of the inner housing 252 may be 0.1 mm to 1 mm. For example, the wall thickness of the outer bottom housing 2512 of the ceramic outer housing 251 may be 0.3 mm, the wall thickness of the inner bottom housing 2522 of the inner housing 252 may be 0.3 mm, and the thickness sum H2 of the outer bottom housing 2512 and the inner bottom housing 2522 may be 0.6 mm. In this embodiment of this application, when the inner housing 252 is made of the fiber reinforced composite, a wall thickness of the inner housing 252 can be smaller. When the inner housing is made of plastics, a thickness of the inner housing is at least 0.3 mm. Therefore, the thickness of the inner housing 252 made of the fiber reinforced composite is smaller while satisfying a strength requirement.

A wall thickness of the outer side housing 2511 of the ceramic outer housing 251 may be 0.15 mm to 0.6 mm, and a wall thickness of the inner side housing 2521 of the inner housing 252 may be 0.1 mm to 1 mm. For example, the wall thickness of the outer side housing 2511 of the ceramic outer housing 251 may be 0.2 mm, the wall thickness of the inner side housing 2521 of the inner housing 252 may be 0.25 mm, and the thickness sum H1 of the outer side housing 2511 and the inner side housing 2521 may be 0.45 mm. It should be understood that, because some wall thicknesses of the inner housing 252 and the ceramic outer housing 251 are not uniform, the foregoing thicknesses are maximum thicknesses of the bottom housing and the side frame of the rear cover 250.

In a possible implementation, when the ceramic outer housing 251 is made of a ceramic material, a strength of the ceramic material may be 300 MPa to 1700 MPa. For example, a ceramic strength of the ceramic outer housing 251 may be 1000 MPa, or a ceramic strength of the ceramic outer housing 251 may be 1500 MPa. It should be noted that the ceramic outer housing 251 includes the outer bottom housing 2512 and the outer side housing 2511. Therefore, it should be understood that, that the ceramic strength of the ceramic outer housing 251 is 300 MPa to 1700 MPa means that ceramic strengths of both the outer bottom housing 2512 and the outer side housing 2511 of the ceramic outer housing 251 are 300 MPa to 1700 MPa. A ceramic fracture toughness of the ceramic outer housing 251 is 2 MPa m^{1/2} to 16 MPa·m^{1/2}. For example, the ceramic fracture toughness of the ceramic outer housing 251 may be 8 MPa·m^{1/2}, or the ceramic fracture toughness of the ceramic outer housing 251 may be 10 MPa·m^{1/2}.

In a possible implementation, when the inner housing 252 is made of the fiber reinforced composite, a flexural strength of the fiber reinforced composite may be greater than or equal to 450 MPa. For example, the flexural strength of the fiber reinforced composite may be 600 MPa, or the flexural strength of the fiber reinforced composite may be 1000 MPa. A flexural modulus of the fiber reinforced composite may be greater than or equal to 25 GPa. For example, the flexural modulus of the fiber reinforced composite may be 30 GPa, or the flexural modulus of the fiber reinforced composite may be 40 GPa. In this way, the inner housing 252 made of the fiber reinforced composite and the ceramic outer housing 251 are not easily fractured in a press fitting process, thereby ensuring that the inner housing 252 has a relatively high strength and a relatively desirable flexural property.

In a possible implementation, a material of the ceramic outer housing 251 may include but is not limited to zirconia, silicon carbide, silicon nitride, aluminum nitride, or alumina. For example, the material of the ceramic outer housing 251 may be a zirconia ceramic sheet, or the material of the ceramic outer housing 251 may be an alumina ceramic sheet. It should be understood that, that the material of the ceramic outer housing 251 is zirconia, silicon carbide, silicon nitride, aluminum nitride, or alumina mainly means that when the ceramic outer housing 251 is made of a ceramic material, a main raw material in the ceramic material is zirconia, silicon carbide, silicon nitride, aluminum nitride, or alumina.

In a possible implementation, the rear cover 250 provided in this embodiment of this application is fabricated by using the following steps.

Step (a): Provide the ceramic outer housing 251 and the inner housing 252 made of the fiber reinforced composite.

In this embodiment of this application, the ceramic outer housing 251 may be obtained by performing rough machining and surface treatment on a ceramic green body. During rough machining performed on the ceramic green body, for example, cavity edge and bottom residues of the ceramic green body may be removed in a CNC or laser processing manner, and the ceramic outer housing 251 may be trimmed. Surface treatment is performed after rough machining. For example, a surface of the ceramic outer housing 251 can be roughly ground to a required thickness by using a grinding device.

For provision of the inner housing 252 made of the fiber reinforced composite, for example, the fiber reinforced composite may be made into a plate, and rough machining and surface treatment may be performed on the fiber reinforced composite plate to obtain the inner housing 252. During rough machining performed on the fiber reinforced composite plate, for example, cavity edge and bottom residues of the fiber reinforced composite plate may be removed in a CNC or laser processing manner, and a frame body may be trimmed.

Step (b): Dispose the adhesive layer between the ceramic outer housing 251 and the inner housing 252 made of the fiber reinforced composite.

The adhesive layer may be disposed on an inner side face of the ceramic outer housing 251 (that is, a side that is of the ceramic outer housing 251 and that faces the inner housing 252), or the adhesive layer may be disposed on an outer side face of the inner housing 252 (that is, a side that is of the inner housing 252 and that faces the ceramic outer frame 221). The adhesive layer may be a resin glue, and a thickness of the adhesive layer may be set depending on an actual requirement. The ceramic outer housing 251 and the inner housing 252 may be pre-fastened together by using the adhesive layer before press fitting. In addition, the adhesive layer enables the ceramic outer housing 251 and the inner housing 252 to be tightly bonded after the press fitting.

Step (c): Perform press fitting processing on the ceramic outer housing 251, the adhesive layer, and the inner housing 252 made of the fiber reinforced composite, to form the rear cover 250.

For press fitting between the inner housing 252 and the ceramic outer housing 251, for example, a hot pressing manner may be used for press fitting. During hot pressing, the inner housing 252 made of the fiber reinforced composite and the ceramic outer housing 251 are tightly bonded, and the inner housing 252 and the ceramic outer housing 251 form the rear cover 250 including ceramics and the fiber reinforced composite. Because the inner housing 252 made of the fiber reinforced composite is included, the inner housing 252 can provide strength support. In this way, the thickness of the ceramic outer housing 251 can be reduced, so that the weight of the rear cover 250 including the inner housing 252 and the ceramic outer housing 251 is greatly reduced, compared with an all-ceramic battery cover that has a same thickness as the rear cover 250, thereby reducing the weight of the formed rear cover 250. When the battery cover is applied to the electronic device, the weight of the electronic device is reduced. In addition, in this embodiment of this application, the ceramic outer housing 251 and the inner housing 252 can be press-fitted to form the rear cover 250, and therefore a process is simple.

After step (c), the method further includes: performing cavity CNC finishing on the fabricated rear cover 250. For example, the rear cover 250 is wrapped in an iron cavity fixture, the rear cover 250 may be bonded and fastened by using a UV glue, the rear cover 250 is fixed by using a magnet jig, and precise positioning and processing are performed on the rear cover 250 by using a probe.

In this embodiment of this application, to increase binding force between the ceramic outer housing 251 and the inner housing 252 made of the fiber reinforced composite, before the ceramic outer housing 251 is injection molded, the method further includes: performing roughening processing on an inner side wall of the ceramic outer housing 251 or an outer side wall of the inner housing 252. For example, the ceramic outer housing 251 may be positioned on a fixture by using a positioning pin, and after a cylinder is tightened, the inner surface of the ceramic outer housing 251 is automatically processed by using a probe tool, to form a concave-convex structure. In this way, during press fitting, a contact area between the inner housing 252 made of the fiber reinforced composite and the ceramic outer housing 251 is increased by using the adhesive layer, and the binding force is increased.

After cavity CNC finishing is performed, the method further includes: performing CNC processing on a shape of the ceramic outer housing 251. For example, the rear cover 250 obtained after the CNC finishing is positioned and fastened, and the shape of the ceramic outer housing 251 is processed. In this way, a required outline is obtained after the processing.

After CNC processing is performed on the shape of the ceramic outer housing 251, the method further includes: performing rough polishing and side hole processing of the ceramic outer housing 251, fine polishing of the ceramic outer housing 251, and surface treatment of the ceramic outer housing 251. For example, the ceramic outer housing 251 is roughly polished first. After rough polishing is performed, the bottom housing and the side frame of the rear cover 250 are punctured (for example, a power-on key hole and a camera assembly hole), and hole locations are processed by using a CNC. After puncturing is performed, the ceramic outer housing 251 is finely polished. After fine polishing is performed, surface treatment is performed on the ceramic outer housing 251. For example, a surface of the ceramic outer housing 251 may be coated with a coating through vapor deposition. The coating may be an anti-fingerprint (Anti Finger, AF) film. Based on the coating, fingerprints are not easily left on the ceramic surface, and the ceramic surface has desirable abrasion resistance. Alternatively, a film layer may be deposited on a surface of the ceramic outer housing 251 through physical vapor deposition (Physical vapor deposition, PVD), so that fingerprints are not easily left on the ceramic surface, and the ceramic surface has desirable abrasion resistance.

It is detected that the weight of the rear cover 250 fabricated by using the foregoing steps is reduced by 10 g to 25 g, compared with an all-ceramic outer housing that has a same size as the rear cover 250. The weight of the fabricated rear cover 250 approximates to a weight of a metal battery cover that has the same size as the rear cover 250.

In the electronic device provided in this embodiment of this application, the rear cover 250 includes the ceramic outer housing 251 and the inner housing 252 made of the fiber reinforced composite. In this way, the thickness of the ceramic outer housing 251 can be reduced, so that the weight of the electronic device is reduced. In addition, an inner side of the rear cover 250 is the inner housing 252 made of the fiber reinforced composite, so that the inner housing 252 can provide strength support for the ceramic outer housing 251, and therefore the frame 22 satisfies a strength requirement on a premise of reducing the thickness of the ceramic outer housing 251. Moreover, the inner side of the rear cover 250 is the inner housing 252 made of the fiber reinforced composite, and therefore a complex inner structure design is easily made on the inner housing 252. This avoids a problem that the inner structure design is not easily made on the ceramic outer housing 251 that has relatively high hardness. In this embodiment of this application, an outer surface of the rear cover 250 is the ceramic outer housing 251, so that an all-ceramic outer housing is implemented for the electronic device on a premise of reducing the weight of the electronic device, and high quality and hardness of the rear cover 250 of the electronic device are implemented.

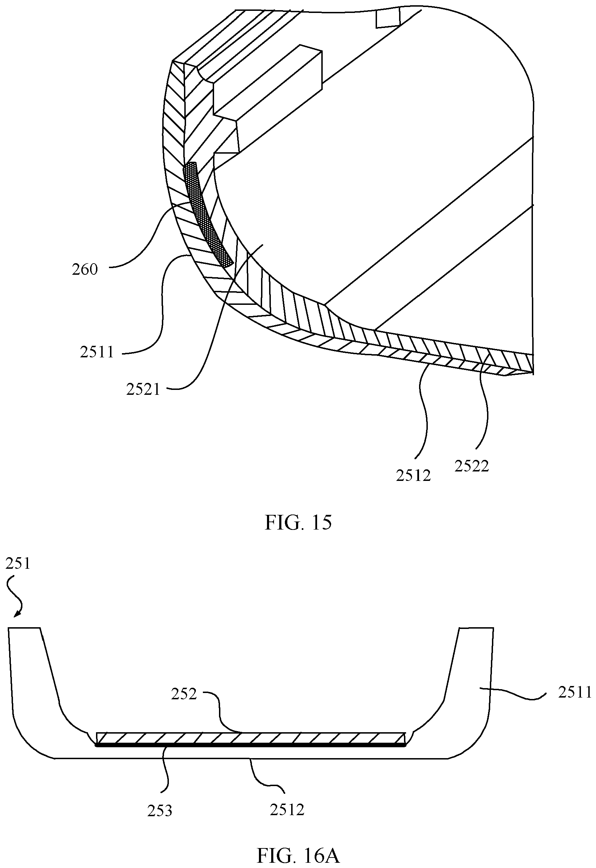

In a possible implementation, an antenna may be disposed in the electronic device. In this embodiment of this application, an antenna radiator may be disposed between the ceramic outer housing 251 and the inner housing 252. For example, as shown in FIG. 14, at least one antenna radiator 260 may be disposed between the outer bottom housing 2512 of the ceramic outer housing 251 and the inner bottom housing 2522 of the inner housing 252. Alternatively, in some other examples, as shown in FIG. 15, at least one antenna radiator 260 may be disposed between the outer side housing 2511 of the ceramic outer housing 251 and the inner side housing 2521 of the inner housing 252 made of the fiber reinforced composite. Alternatively, at least one antenna radiator 260 may be disposed between the outer bottom housing 2512 of the ceramic outer housing 251 and the inner bottom housing 2522 of the inner housing 252, and at least one antenna radiator 260 may be disposed between the outer side housing 2511 of the ceramic outer housing 251 and the inner side housing 2521 of the inner housing 252. Alternatively, the antenna radiator 260 may be located between the ceramic outer housing 251 and the inner housing 252 and located at corner locations of inner surfaces that are of the outer side housing 2511 and the outer bottom housing 2512.

In this embodiment of this application, a clearance of the antenna radiator 260 may be less than 10 mm. For example, the clearance of the antenna radiator 260 may be 5 mm. An impedance of the antenna radiator 260 may be less than 5 Ω. For example, the impedance of the antenna radiator 260 may be 1 Ω. For a quantity of antenna radiators 260 and a location of the antenna radiator 260 disposed between the inner housing 252 and the ceramic outer housing 251, refer to the descriptions in the scenario 2. In this embodiment, the quantity of antenna radiators 260 disposed between the inner housing 252 and the ceramic outer housing 251 and antenna types are not limited. For example, a main antenna, a MIMO antenna, a Wi-Fi antenna, a Bluetooth antenna, a GPS antenna, and a diversity antenna may be disposed. For operating frequency bands of the antennas, refer to the descriptions in the scenario 2. Details are not described in this embodiment again.

In this embodiment of this application, when the antenna radiator 260 is disposed, during fabrication of the rear cover 250, for example, before the ceramic outer housing 251 and the inner housing 252 are press fitted, the method may further include: disposing the antenna radiator 260 on the inner surface of the ceramic outer housing 251 (for example, the inner surface of the outer bottom housing 2512 or the inner surface of the outer side housing 2511); disposing the adhesive layer on the inner surface of the ceramic outer housing 251 on which the antenna radiator 260 is disposed; and press fitting the ceramic outer housing 251, the adhesive layer, and the inner housing 252, where the antenna radiator 260 is press fitted between the ceramic outer housing 251 and the inner housing 252.

In another possible implementation, the ceramic outer housing 251 includes the outer bottom housing 2512 and the outer side housing 2511, and the outer bottom housing 2512 and the outer side housing 2511 are not on a same plane. Therefore, in the process of press fitting performed on the inner housing 252 made of the fiber reinforced composite and the ceramic outer housing 251, the fiber reinforced composite (for example, the glass fiber plate or the carbon fiber plate) can be laminated onto the inner surface of the ceramic outer housing 251 only when the fiber reinforced composite is bent at the corners between the outer bottom housing 2512 and the outer side housing 2511. However, due to a relatively high strength of the fiber reinforced composite, the fiber reinforced composite is not easily bent, and is easily at a risk of fracture in a bending process.

In view of this, in this embodiment of this application, the inner housing 252 partially covers the inner surface of the ceramic outer housing 251. For example, as shown in FIG. 16A, the ceramic outer housing 251 may include the outer bottom housing 2512 and the outer side housing 2511, the outer bottom housing 2512 is a planar region, there is an arc transition at a corner between the outer bottom housing 2512 and the outer side housing 2511, and the inner housing 252 covers the inner surface of the outer bottom housing 2512 of the ceramic outer housing 251. In addition, the inner housing 252 may include the inner bottom housing 2522, the inner bottom housing 2522 may be of a flat plate structure, and the inner housing 252 does not extend to the inner surface of the outer side housing 2511. In this way, when the inner housing 252 and the ceramic outer housing 251 are press fitted to form the rear cover 250, the material of the inner housing 252 does not need to be bent. This avoids a risk that the material of the inner housing 252 is fractured in the press fitting process.

As shown in FIG. 16A, a bottom housing region of the rear cover 250 is a composite-material region formed by ceramics and the fiber reinforced composite, a side edge of the rear cover 250 is made of a ceramic material, thicknesses of two regions of the ceramic outer housing 251, that is, the outer bottom housing 2512 and the outer side housing 2511 are set to be unequal, and the inner housing is located in a region that is of the ceramic outer housing 251 and that has a relatively small thickness.

To ensure that the inner housing 252 and the ceramic outer housing 251 are bonded more firmly, the adhesive layer 253 is disposed between the inner housing 252 and the ceramic outer housing 251, and the inner housing 252 and the ceramic outer housing 251 are sealed and connected by using the adhesive layer. In this way, vapor does not easily enter a location between the inner housing 252 and the ceramic outer housing 251, thereby avoiding a problem of delamination between the inner housing 252 and the ceramic outer housing 251 caused because vapor enters the location between the inner housing 252 and the ceramic outer housing 251.

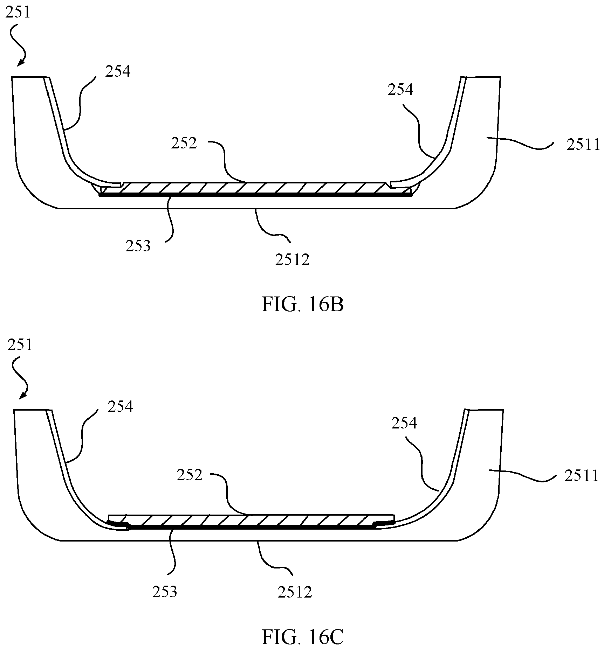

In a possible implementation, when the inner housing 252 covers the inner surface of the outer bottom housing 2512 of the ceramic outer housing 251, the inner surface of the outer side housing 2511 of the ceramic outer housing 251 is in an exposed state. However, due to relatively high hardness and roughness of the ceramic outer housing 251, the exposed inner surface of the ceramic outer housing 251 easily scratches a component in contact with the exposed inner surface. For example, the battery 240 is usually installed inside the electronic device, and the battery 240 usually comes into contact with the rear cover 250. In this case, when the electronic device is hit or collided with, the exposed inner surface of the ceramic outer housing 251 easily scratches the battery 240, resulting in a leakage of the battery 240. In view of this, to resolve this problem, in this embodiment of this application, the rear cover 250 further includes a protective film 254, where the protective film 254 is disposed on the exposed inner surface of the ceramic outer housing 251. For example, as shown in FIG. 16B, one end of the protective film 254 extends to an edge of the inner surface of the outer side housing 2511 of the ceramic outer housing 251; and the other end of the protective film 254 extends to the inner housing 252, and the protective film 254 and the inner housing 252 are disposed in a partially overlapping mode. Based on the protective film 254, the exposed inner surface of the ceramic outer housing 251 is shielded, and a problem that the inner surface of the ceramic outer housing 251 scratches the battery 240 or another electronic component is avoided.

In this embodiment of this application, when the protective film 254 is disposed, as shown in FIG. 16B, one end of the protective film 254 is located at the edge of the inner surface of the outer side housing 2511 of the ceramic outer housing 251, and the other end of the protective film 254 extends to an inner surface of the inner housing 252, so that the protective film 254 shields a location at which an outer edge of the inner housing 252 overlaps the ceramic outer housing 251. In this way, the inner surface of the rear cover 250 is smoothly transitioned, and nice appearance of the inner surface of the rear cover 250 is ensured. In addition, when the protective film 254 shields the location at which the outer edge of the inner housing 252 overlaps the ceramic outer housing 251, a foreign matter such as vapor or dust does not easily accumulate at the location at which the outer edge of the inner housing 252 overlaps the ceramic outer housing 251. Moreover, after the protective film 254 shields the outer edge of the inner housing 252, the outer edge of the inner housing 252 made of the fiber reinforced composite such as the glass fiber plate or the carbon fiber plate is not exposed. This avoids that the outer edge of the inner housing 252 made of the glass fiber plate or the carbon fiber plate scratches the battery 240 or the electronic component, thereby ensuring that a component in the electronic device is not easily damaged during collision or installation.

Alternatively, as shown in FIG. 16C, one end of the protective film 254 is located at the edge of the inner surface of the outer side housing 2511 of the ceramic outer housing 251, the other end of the protective film 254 extends to a region in which the inner housing 252 overlaps the ceramic outer housing 251, and the protective film 254 partially overlaps the inner housing 252. When the inner housing 252 and the protective film 254 are disposed in an overlapping mode, a thickness of a region in which the inner housing 252 overlaps the protective film 254 is less than a thickness of a region in which the inner housing 252 does not overlap the protective film 254. In other words, the inner housing 252 is an inner housing with unequal thicknesses.

In this embodiment of this application, in FIG. 16B and FIG. 16C, the region in which the protective film 254 overlaps the inner housing 252 is located at the outer bottom housing 2512 of the ceramic outer housing 251. To be specific, in the rear cover 250, the side edge of the rear cover 250 is made of a ceramic material, and the bottom housing of the battery cover 240 is made of two composite materials: ceramics and the glass fiber plate, or ceramics and the carbon fiber plate. This reduces the weight of the rear cover 250 on a premise of ensuring a strength of the rear cover 250, and reduces a risk of fracture of the inner housing 252.

Certainly, in some examples, the protective film 254 may alternatively not extend to the inner surface of the inner housing 252 or the region in which the inner housing 252 overlaps the ceramic outer housing 251. For example, one end of the protective film 254 extends to a location at which the end of the protective film 254 can come into contact with the outer edge of the inner housing 252.

In this embodiment of this application, the protective film 254 may be an explosion-proof film, where the explosion-proof film may be a metal film; or the protective film 254 may be an adhesive layer. When the protective film 254 is an adhesive layer, the protective film 254 can cushion the battery 240 or the electronic component when the electronic device is hit. This avoids that the battery 240 or the electronic component is damaged due to a collision with the rear cover 250. In addition, when the protective film 254 is an adhesive layer, the protective film 254 can have a seal effect, thereby preventing vapor from entering the location between the inner housing 252 and the ceramic outer housing 251. Moreover, the adhesive layer extends to the inner housing 252, so that the inner housing 252 and the ceramic outer housing 251 can be further fastened.

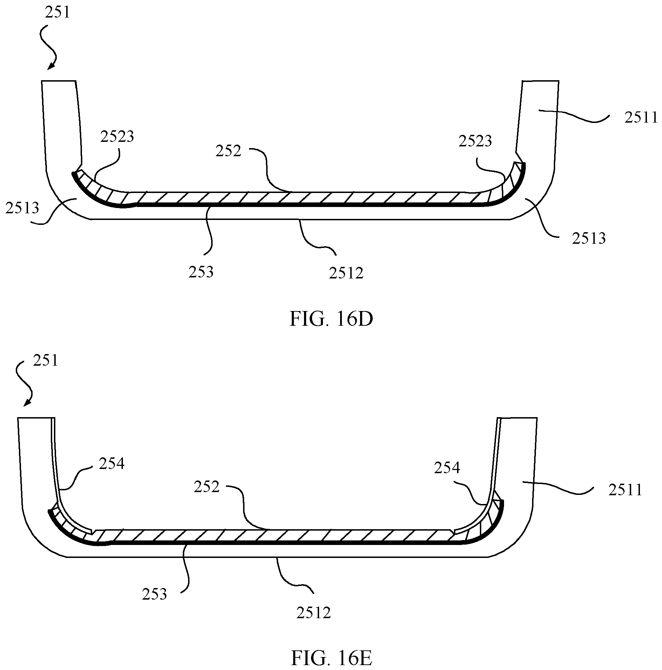

In another possible implementation, when the inner housing 252 partially covers the inner surface of the ceramic outer housing 251, as shown in FIG. 16D, the outer edge of the inner housing 252 is bent to form an arc-shaped region 2523, there is an arc-shaped connection region 2513 between the outer bottom housing 2512 and the outer side housing 2511 of the ceramic outer housing 251, and the arc-shaped region 2523 of the inner housing 252 covers an inner surface of the arc-shaped connection region 2513. In other words, in this embodiment of this application, a partial region of the inner housing 252 extends to the arc-shaped connection region 2513 between the outer bottom housing 2512 and the outer side housing 2511. Compared with FIG. 13, a degree of bending of the inner housing 252 in FIG. 16D is far lower than that of the inner housing 252 in FIG. 13. Therefore, a probability that the inner housing 252 is fractured in the process of press fitting between the inner housing 252 and the ceramic outer housing 251 is reduced. In this embodiment of this application, the inner housing 252 partially covers the inner surface of the ceramic outer housing 251, and the outer edge of the inner housing 252 extends to the inner surface of the arc-shaped connection region of the ceramic outer housing 251. This reduces the risk that the material of the inner housing 252 is fractured in the press fitting process. In addition, because a thickness of the region that is of the ceramic outer housing 251 and that is covered by the inner housing 252 is relatively small, a weight of the ceramic outer housing 251 is reduced, and the inner housing 252 is disposed in such a way that the strength of the rear cover 250 satisfies a requirement.

When the outer edge of the inner housing 252 extends to the arc-shaped connection region 2513 of the ceramic outer housing 251, the protective film 254 may be shown in FIG. 16E. One end of the protective film 254 extends to the edge of the inner surface of the outer side housing 2511 (that is, an inner surface of one end that is of the outer side housing 2511 and that is far away from the arc-shaped connection region 2513), and the other end of the protective film 254 extends to the arc-shaped region 2521 of the inner housing 252. Alternatively, in some examples, the other end of the protective film 254 extends to the region in which the inner housing 252 overlaps the ceramic outer housing 251.

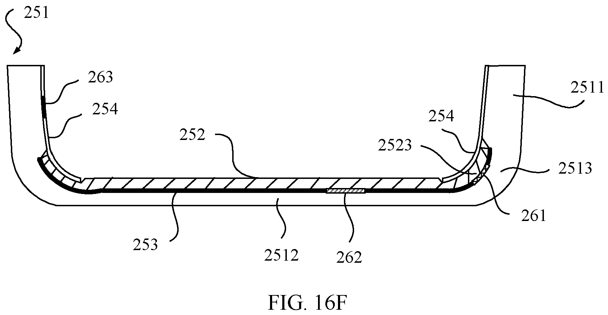

In this embodiment of this application, there may be one or more antenna radiators 260. For example, as shown in FIG. 16F, there may be three antenna radiators 260: a first antenna radiator 261, a second antenna radiator 262, and a third antenna radiator 263. The first antenna radiator 261 may be located between the arc-shaped region 2523 of the inner housing 252 and the arc-shaped connection region 2513 of the ceramic outer housing 251. The second antenna radiator 262 may be located between the inner housing 252 and the outer bottom housing 2512 of the ceramic outer housing 251. The third antenna radiator 263 may be located between the protective film 254 and the outer side housing 2511 of the ceramic outer housing 251. Certainly, in some examples, specified locations of the antenna radiators 260 include but are not limited to the locations shown in FIG. 16F. For example, all the antenna radiators 260 may be located between the inner housing 252 and the outer bottom housing 2512 of the ceramic outer housing 251, or may be located on the inner surface of the outer side housing 2511 of the ceramic outer housing 251. The antenna radiators 260 are specifically disposed on the rear cover 250 depending on an actual requirement.

In the descriptions of the embodiments of this application, it should be noted that, unless otherwise clearly specified and limited, terms "installation" and "connection" should be interpreted in a broad sense. For example, the terms may refer to fixed connections, indirect connections through intermediaries, internal connections between two elements, or interactions between two elements. Persons of ordinary skill in the art can understand specific meanings of the foregoing terms in the embodiments of this application according to specific circumstances.

In the specification, claims, and accompanying drawings of embodiments of this application, the terms "first", "second", "third", "fourth", and the like (if existent) are intended to distinguish between similar objects, but are not necessarily intended to indicate a specific order or sequence.

## Claims

1. A rear cover (50), comprising a ceramic outer housing (52) and an inner housing (51) made of a fiber reinforced composite, wherein the inner housing (51) is disposed on an inner surface of the ceramic outer housing (52);
further comprising an adhesive layer (53), wherein the adhesive layer (53) is located between the ceramic outer housing (52) and the inner housing (51), and the ceramic outer housing (52), the adhesive layer (53), and the inner housing (51) are press-fitted to form the rear cover (50);
**characterized in that** an orthographic projection of the inner housing (51) toward the inner surface of the ceramic outer housing (52) partially covers the inner surface of the ceramic outer housing (52);
wherein the ceramic outer housing (52) comprises a planar region and an arc-shaped region, the arc-shaped region is located at an outer edge of the planar region, and the inner housing covers an entire inner surface of the planar region and a partial inner surface of the arc-shaped region, wherein a thickness (H2) of a part of the arc-shaped region is greater than a thickness (H1) of the planar region.

2. The rear cover (50) according to claim 1, wherein the fiber reinforced composite is a composite plate made of a plastic matrix and reinforcing fiber, and the reinforcing fiber comprises one or more of glass fiber, carbon fiber, boron nitride fiber, silicon carbide fiber, alumina fiber, boron fiber, zirconia fiber, aramid fiber, or ultra-high-molecular-weight polyethylene fiber.

3. The rear cover (50) according to any one of claims 1 to 2, wherein the fiber reinforced composite is a glass fiber plate made of a plastic matrix and glass fiber, and the inner housing (51) is a housing made of the glass fiber plate.

4. The rear cover (50) according to any one of claims 1 to 3, wherein a wall thickness of the ceramic outer housing (52) is 0.15 mm to 0.6 mm, and a wall thickness of the inner housing (51) is 0.1 mm to 1 mm; or a ceramic strength of the ceramic outer housing (52) is 300 MPa to 1700 Mpa, and a ceramic fracture toughness of the ceramic outer housing (52) is 2 MPa·m^{1/2} to 16 MPa·m^{1/2}; or
a flexural strength of the fiber reinforced composite may be greater than or equal to 450 MPa, and a flexural modulus of the fiber reinforced composite may be greater than or equal to 25 GPa.

5. The rear cover (50) according to any one of claims 1 to 4, wherein a material of the ceramic outer housing (52) comprises zirconia, silicon carbide, silicon nitride, aluminum nitride, or alumina ceramics.

6. The rear cover (50) according to any one of claims 1 to 5, further comprising at least one antenna (601), wherein the antenna (601) comprises an antenna radiator (61) and a feed point (a1) and a ground point (c1) that are electrically connected to the antenna radiator (61), and the antenna radiator (61) is disposed between the ceramic outer housing (52) and the inner housing (51), or the antenna radiator (61) is disposed on the inner surface of the ceramic outer housing (52).

7. The rear cover (50) according to claim 6, wherein an impedance of the antenna (601) is less than or equal to 5 Ω.

8. The rear cover (50) according to any one of claims 1 to 7, wherein when the orthographic projection of the inner housing (51) toward the inner surface of the ceramic outer housing (52) partially covers the inner surface of the ceramic outer housing (52), the rear cover (50) further comprises:
a protective film (254), wherein the protective film (254) covers at least an exposed inner surface of the ceramic outer housing (52); wherein one end of the protective film (254) extends to an inner surface of the inner housing (51), or one end of the protective film (254) extends between the inner housing (51) and the ceramic outer housing (52).

9. An electronic device (100), comprising at least a display screen (10) and the rear cover according to any one of claims 1 to 8.

## Patentansprüche

1. Hintere Abdeckung (50), umfassend ein keramisches Außengehäuse (52) und ein Innengehäuse (51), das aus einem faserverstärkten Verbundwerkstoff gefertigt ist, wobei das Innengehäuse (51) auf einer inneren Oberfläche des keramischen Außengehäuses (52) angeordnet ist;
ferner umfassend eine Klebstoffschicht (53), wobei sich die Klebstoffschicht (53) zwischen dem keramischen Außengehäuse (52) und dem Innengehäuse (51) befindet und das keramische Außengehäuse (52), die Klebstoffschicht (53) und das Innengehäuse (51) pressgepasst sind, um die hintere Abdeckung (50) zu bilden;
**dadurch gekennzeichnet, dass** eine orthographische Projektion des Innengehäuses (51) in Richtung der inneren Oberfläche des keramischen Außengehäuses (52) die innere Oberfläche des keramischen Außengehäuses (52) teilweise bedeckt;
wobei das keramische Außengehäuse (52) einen ebenen Bereich und einen bogenförmigen Bereich umfasst, sich der bogenförmige Bereich an einer Außenkante des ebenen Bereichs befindet und das Innengehäuse eine gesamte innere Oberfläche des ebenen Bereichs und eine innere Teiloberfläche des bogenförmigen Bereichs bedeckt, wobei eine Dicke (H2) eines Teils des bogenförmigen Bereichs größer als eine Dicke (H1) des ebenen Bereichs ist.

2. Hintere Abdeckung (50) nach Anspruch 1, wobei der faserverstärkte Verbundwerkstoff eine Verbundwerkstoffplatte ist, die aus einer Kunststoffmatrix und einer verstärkenden Faser gefertigt ist, und die verstärkende Faser eine oder mehrere von Glasfaser, Kohlenstofffaser, Bornitridfaser, Siliziumkarbidfaser, Aluminiumoxidfaser, Borfaser, Zirconiumdioxidfaser, Aramidfaser oder Polyethylenfaser mit ultrahohem Molekulargewicht umfasst.

3. Hintere Abdeckung (50) nach einem der Ansprüche 1 bis 2, wobei der faserverstärkte Verbundwerkstoff eine Glasfaserplatte ist, die aus einer Kunststoffmatrix und einer Glasfaser gefertigt ist, und das Innengehäuse (51) ein Gehäuse ist, das aus der Glasfaserplatte gefertigt ist.

4. Hintere Abdeckung (50) nach einem der Ansprüche 1 bis 3, wobei eine Wandstärke des keramischen Außengehäuses (52) 0,15 mm bis 0,6 mm beträgt und eine Wandstärke des Innengehäuses (51) 0,1 mm bis 1 mm beträgt; oder eine Keramikfestigkeit des keramischen Außengehäuses (52) 300 MPa bis 1700 MPa beträgt und eine Keramikbruchzähigkeit des keramischen Außengehäuses (52) 2 MPa·m^{1/2} bis 16 MPa·m^{1/2}beträgt; oder
eine Biegefestigkeit des faserverstärkten Verbundwerkstoffs größer als oder gleich 450 MPa sein kann und ein Biegemodul des faserverstärkten Verbundwerkstoffs größer als oder gleich 25 GPa sein kann.

5. Hintere Abdeckung (50) nach einem der Ansprüche 1 bis 4, wobei ein Material des keramischen Außengehäuses (52) Zirconiumdioxid, Siliziumkarbid, Siliziumnitrid, Aluminiumnitrid oder Aluminiumoxidkeramik umfasst.

6. Hintere Abdeckung (50) nach einem der Ansprüche 1 bis 5, ferner umfassend mindestens eine Antenne (601), wobei die Antenne (601) einen Antennenstrahler (61) und einen Speisepunkt (a1) und einen Erdungspunkt (c1) umfasst, die elektrisch mit dem Antennenstrahler (61) verbunden sind, und der Antennenstrahler (61) zwischen dem keramischen Außengehäuse (52) und dem Innengehäuse (51) angeordnet ist oder der Antennenstrahler (61) auf der inneren Oberfläche des keramischen Außengehäuses (52) angeordnet ist.

7. Hintere Abdeckung (50) nach Anspruch 6, wobei eine Impedanz der Antenne (601) kleiner als oder gleich 5 2 ist.

8. Hintere Abdeckung (50) nach einem der Ansprüche 1 bis 7, wobei, wenn die orthographische Projektion des Innengehäuses (51) in Richtung der inneren Oberfläche des keramischen Außengehäuses (52) die innere Oberfläche des keramischen Außengehäuses (52) teilweise bedeckt, die hintere Abdeckung (50) ferner Folgendes umfasst:
eine Schutzfolie (254), wobei die Schutzfolie (254) mindestens eine freiliegende innere Oberfläche des keramischen Außengehäuses (52) bedeckt; wobei sich ein Ende der Schutzfolie (254) bis zu einer inneren Oberfläche des Innengehäuses (51) erstreckt oder sich ein Ende der Schutzfolie (254) zwischen dem Innengehäuse (51) und dem keramischen Außengehäuse (52) erstreckt.

9. Elektronische Vorrichtung (100), umfassend mindestens einen Anzeigebildschirm (10) und die hintere Abdeckung nach einem der Ansprüche 1 bis 8.

## Revendications

1. Couvercle arrière (50), comprenant un boîtier extérieur en céramique (52) et un boîtier intérieur (51) constitué d'un composite renforcé de fibres, dans lequel le boîtier intérieur (51) est disposé sur une surface intérieure du boîtier extérieur en céramique (52) ;
comprenant également une couche adhésive (53), dans lequel la couche adhésive (53) est située entre le boîtier extérieur en céramique (52) et le boîtier intérieur (51), et le boîtier extérieur en céramique (52), la couche adhésive (53) et le boîtier intérieur (51) sont ajustés par pression pour former le couvercle arrière (50) ;
**caractérisé en ce qu'**une projection orthographique du boîtier intérieur (51) vers la surface intérieure du boîtier extérieur en céramique (52) recouvre partiellement la surface intérieure du boîtier extérieur en céramique (52) ;
dans lequel le boîtier extérieur en céramique (52) comprend une région plane et une région en forme d'arc, la région en forme d'arc est située sur un bord extérieur de la région plane, et le boîtier intérieur recouvre une surface intérieure entière de la région plane et une surface intérieure partielle de la région en forme d'arc, dans lequel une épaisseur (H2) d'une partie de la région en forme d'arc est supérieure à une épaisseur (H1) de la région plane.

2. Couvercle arrière (50) selon la revendication 1, dans lequel le composite renforcé par des fibres est une plaque composite constituée d'une matrice plastique et d'une fibre de renforcement, et la fibre de renforcement comprend une ou plusieurs de la fibre de verre, la fibre de carbone, la fibre de nitrure de bore, la fibre de carbure de silicium, la fibre d'alumine, la fibre de bore, la fibre de zircone, la fibre d'aramide ou la fibre de polyéthylène à poids moléculaire ultra élevé.

3. Couvercle arrière (50) selon l'une quelconque des revendications 1 à 2, dans lequel le composite renforcé de fibres est une plaque de fibre de verre constituée d'une matrice plastique et de fibres de verre, et le boîtier intérieur (51) est un boîtier constitué de la plaque de fibre de verre.

4. Couvercle arrière (50) selon l'une quelconque des revendications 1 à 3, dans lequel une épaisseur de paroi du boîtier extérieur en céramique (52) est de 0,15 mm à 0,6 mm, et une épaisseur de paroi du boîtier intérieur (51) est de 0,1 mm à 1 mm ; ou une résistance céramique du boîtier extérieur en céramique (52) est de 300 MPa à 1700 Mpa, et une ténacité à la fracture céramique du boîtier extérieur en céramique (52) est de 2 MPa ·m^{1/2} à 16 MPa ·m^{1/2}; ou
une résistance à la flexion du composite renforcé de fibres peut être supérieure ou égale à 450 MPa, et un module de flexion du composite renforcé de fibres peut être supérieur ou égal à 25 GPa.

5. Couvercle arrière (50) selon l'une quelconque des revendications 1 à 4, dans lequel un matériau du boîtier extérieur en céramique (52) comprend de la zircone, du carbure de silicium, du nitrure de silicium, du nitrure d'aluminium ou des céramiques d'alumine.

6. Couvercle arrière (50) selon l'une quelconque des revendications 1 à 5, comprenant également au moins une antenne (601), dans lequel l'antenne (601) comprend un radiateur d'antenne (61) et un point d'alimentation (a1) et un point de masse (c1) qui sont électriquement reliés au radiateur d'antenne (61), et le radiateur d'antenne (61) est disposé entre le boîtier extérieur en céramique (52) et le boîtier intérieur (51), ou le radiateur d'antenne (61) est disposé sur la surface intérieure du boîtier extérieur en céramique (52).

7. Couvercle arrière (50) selon la revendication 6, dans lequel une impédance de l'antenne (601) est inférieure ou égale à 5 Ω.

8. Couvercle arrière (50) selon l'une quelconque des revendications 1 à 7, dans lequel lorsque la projection orthographique du boîtier intérieur (51) vers la surface intérieure du boîtier extérieur en céramique (52) recouvre partiellement la surface intérieure du boîtier extérieur en céramique (52), le couvercle arrière (50) comprend également :
un film protecteur (254), dans lequel le film protecteur (254) recouvre au moins une surface intérieure exposée du boîtier extérieur en céramique (52) ; dans lequel une extrémité du film protecteur (254) se prolonge jusqu'à une surface intérieure du boîtier intérieur (51), ou une extrémité du film protecteur (254) se prolonge entre le boîtier intérieur (51) et le boîtier extérieur en céramique (52).

9. Dispositif électronique (100), comprenant au moins un écran d'affichage (10) et le couvercle arrière selon l'une quelconque des revendications 1 à 8.
